# EUROPEAN PATENT SPECIFICATION

(11) **EP 2 169 212 B1**
(45) Date of publication and mention of the grant of the patent: **20.02.2019**
(21) Application number: 09171818.9
(22) Date of filing: 30.09.2009
(51) Int. Cl.: B60H 1/00, B60W 10/30, B60W 30/18, F02N 11/08

(54) **Engine control apparatus and engine control method**
Motorsteuervorrichtung und Motorsteuerverfahren
Appareil de contrôle de moteur et son procédé de contrôle de moteur

(30) Priority: 30.09.2008 JP 2008254722; 30.09.2008 JP 2008254730; 24.10.2008 JP 2008273672
(43) Date of publication of application: 31.03.2010
(73) Proprietor: Fujitsu Ten Limited, Kobe-shi, Hyogo 652-8510 (JP)
(72) Inventor: Yamaguchi, Kazuhi, Hyogo 652-8510 (JP)
(74) Representative: Haseltine Lake LLP

(56) References cited:
- EP-A1- 1 571 022
- EP-A1- 2 098 392
- JP-A- 2001 341 515
- JP-A- 2004 232 550
- JP-A- 2005 171 918
- US-A1- 2004 149 246
- US-A1- 2004 211 381

## Description

### BACKGROUND

The present invention relates to an engine control apparatus and an engine control method.

With the spread of vehicles, the amount of emission gas also tends to increase. If an increase in the amount of the emission gas continues in the future, serious problems for the earth, such as global warming and air pollution, are caused. Then, for the purpose of reducing the amount of the emission gas, the economical running control in which an engine stop command is automatically issued when an engine stop condition is satisfied, and an engine restart command is automatically issued when an engine start condition is satisfied has been loaded on a vehicle.

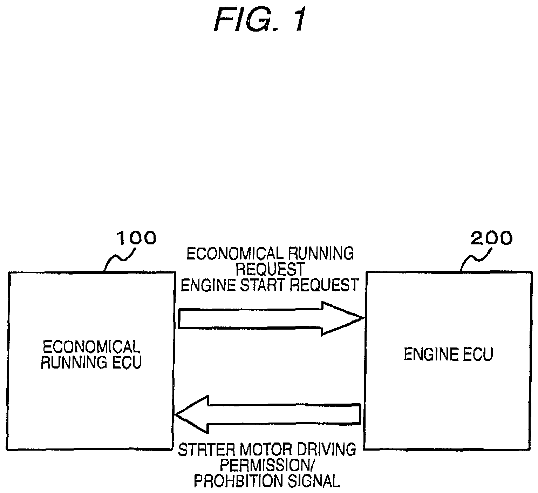

The economical running control will be described referring to Fig. 1. An economical running ECU 100 which performs the economical running control outputs an economical running request (engine stop request) to an engine EUC 200 as shown in Fig. 1 if a vehicle stops and the vehicle is put into a state where the economical running control is possible. The engine ECU 200 carries out a fuel cut to stop the engine upon receiving the economical running request.

Additionally, at the time of the engine start, the economical running ECU 100 detects the starting operation (shift operation, brake operation, clutch operation, etc.) of a driver, and then transmits an engine start request to the engine ECU 200. Upon receiving the engine start request from the economical running ECU 100, the engine ECU 200 releases the fuel cut to output a starter driving permission signal to the economical running ECU 100. The economical running ECU 100 drives a starter motor to start the engine.

By carrying out such an economical running control, the amount of the emission gas and the fuel consumption can be reduced.

However, when the engine stop condition is satisfied and the idling of the engine is stopped, the temperature of the engine water may be reduced since the engine is stopped. If the engine water temperature is reduced, the control of a heater which outputs warm air to a user by using the engine water temperature may also be affected.

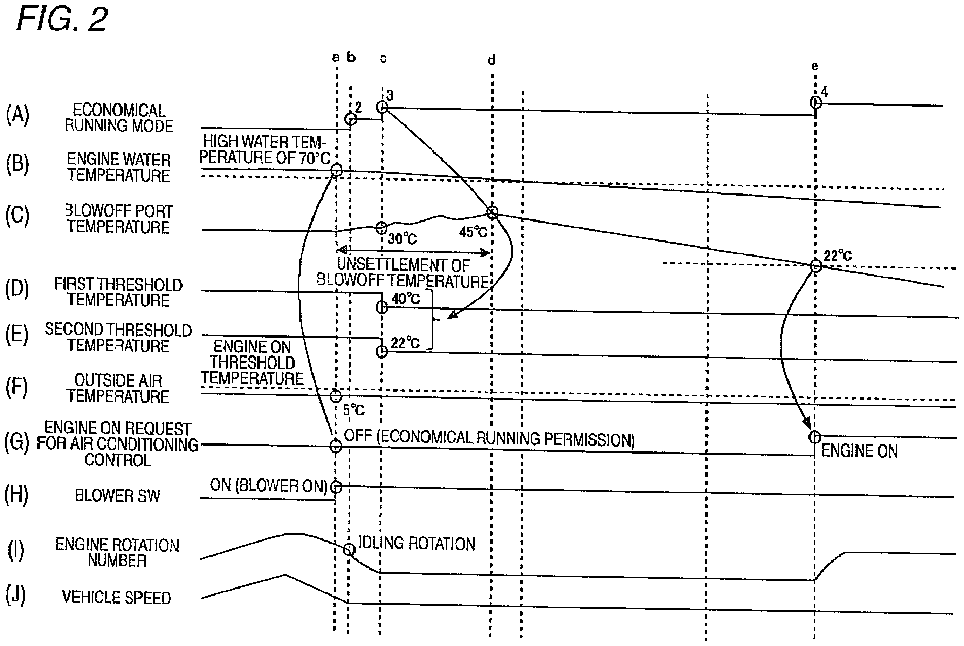

A case where the economical running control affects the temperature control of the heater will be described referring to Fig. 2.

Fig. 2 illustrates the control procedure of the economical running ECU 100 when a blower switch (hereinafter, referred to as blower SW) for turning on/off the heater mounted on the vehicle is turned on immediately before shifting to an economical running mode.

There are four states as the control state of the economical running by the economical running ECU 100. A first state is an "engine rotation state" where the engine start is completed, and the engine rotates. A second state is an "idling stop preparation state" where an idling stop condition is satisfied, and a fuel cut is requested to the engine ECU 200. A third state is an "idling stop state" that is a state where the engine is stopped by the idling stop control. A fourth state is an "engine start state" which is a state where a starter motor is driven to start the engine.

It is assumed that an idling stop condition is satisfied and the blower SW is turned on immediately before shifting to the "idling stop preparation state" that is the second state (refer to the timing a of Fig. 2(H)). If the blower SW is turned on, a blower motor starts driving, and the air by a blower fan is blown into the vehicle interior.

If the blower SW is turned on, the economical running ECU 100 first determines the engine water temperature. It is assumed that the engine water temperature at this time is a high temperature of, for example, 70°C (refer to Fig. 2(B)). The economical running ECU 100 determines that the engine water temperature is high and it is not necessary to turn on the engine for the heater, and permits an economical running. If the shifting to the economical running mode is permitted, shifting to the "idling stop preparation state" that is the second state (refer to the timing b of the economical running mode of Fig. 2(A)) is performed. Here, the economical running ECU 100 requests a fuel cut to the engine ECU 200.

If the engine ECU 200 performs the fuel cut, and shifts to the "idling stop state" that is the third state (refer to the timing c of the economical running mode of Fig. 2(A)), the economical running ECU 100 acquires the blowoff port temperature of the blower fan measured by a sensor, and records the acquired temperature into a memory (refer to the timing c of Fig. 2(C)). The blowoff port of the blower fan is provided with a sensor which measures the blowoff port temperature.

Additionally, the economical running ECU 100 acquires the outside air temperature measured by an outside air temperature sensor, and records the acquired temperature into the memory.

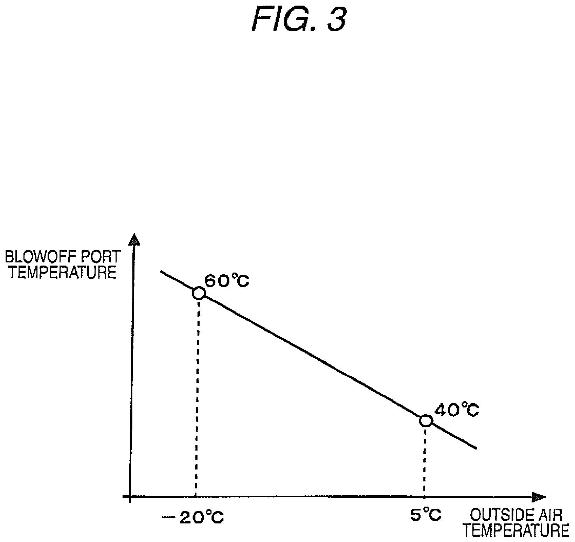

A map shown in Fig. 3 is prepared in the economical running ECU 100. This map is used for determining the blowoff temperature of the blower fan at which it is necessary to turn on the engine from the outside air temperature around the vehicle. In the map shown in Fig. 3, the blowoff port temperature is set to 60°C when the outside air temperature is -20°C, and the blowoff port temperature is set to 40°C when the outside air temperature is 5°C.

The economical running ECU 100 acquires the outside air temperature measured by the outside air temperature sensor, and determines the blowoff temperature of the blower fan at which it is necessary to turn on the engine with reference to the map at the time of the acquired outside air temperature (engine ON blowoff temperature obtained from the map shown in Fig. 3). This temperature is hereinafter referred to as a first threshold temperature. In the example shown in Fig. 2, since the outside air temperature shown in Fig. 2(F) is 5°C, the first threshold temperature is set to 40°C (refer to the timing c of Fig. 2(D).

Then, the economical running ECU 100 set a value, which is obtained by subtracting a predetermined temperature (for example, whcih is set to 8°C in this embodiment) from the acquired blowoff port temperature, to a second threshold temperature. If the temperature of a heater is reduced to around 8°C, a person feels cold, ergonomically. Therefore, the temperature obtained by subtracting the predetermined temperature from the blowoff port temperature of the blower fan when shifting to the third state is set to the second threshold temperature. In addition, this predetermined temperature can be arbitrarily changed. Additionally, in the example shown in Fig. 2, since the blowoff port temperature when shifting to the idling stop state is 30°C (refer to the timing c of the blowoff port temperature of Fig. 2(C)), the second threshold temperature is set to 22°C obtained by subtracting 8°C from 30°C (refer to Fig. 2(E)).

Next, the economical running ECU 100 compares the first threshold temperature with the second threshold temperature to set a lower temperature to a threshold temperature (hereinafter referred to as an engine ON threshold temperature) at which the engine is turned on. Here, the reason why a lower temperature is set to a threshold where the engine is started is because, although there is a hope to remain in the idling stop state as long as possible, it can be determined that the possibility that an occupant feels cold is high when an actual temperature is reduced below both of a temperature at which a person may feel cold based on the outside air temperature and a temperature at which the person may feel cold based on the amount of temperature reduction. In the example shown in Fig. 2, since the first threshold temperature is 40°C and the second threshold temperature is 22°C, the second threshold temperature (22°C) is set to the engine ON threshold.

Thereafter, the economical running ECU 100 monitors the blowoff port temperature of the blower fan. In the "idling stop state" that is the third state, the engine water temperature is reduced since the engine stops, and the blowoff temperature of the heater is also reduced (sections of the timing d to e shown in Fig. 2). Then, if the blowoff port temperature is reduced below 22°C that is the engine ON threshold (refer to the timing e of Fig. 2(C)), the economical running ECU 100 turns on the engine to shift the engine mode to the fourth state that is the "engine start state" (refer to the timing e of the economical running mode of Fig. 2(A)).

In Patent Document 1 discloses a technique of stopping the idling stop state to turn on the engine when the air temperature of a blowoff port is lower than a temperature which a user set as a blowoff temperature condition in the idling stop state.

Patent Document 1 determines necessity of air-conditioning and dehumidification based on an outside air temperature, the air blowoff temperature of an air conditioner, and air suction temperature when a blower fan of the air conditioner is turned on, and setting permission or prohibition of an idling stop based on the determined necessity of the air-conditioning and the dehumidification.

In Patent Document 2, when a cooling request by an air conditioner and the automatic stop of an engine overlap each other, driving of a compressor of the air conditioner is stopped, and when the difference between a target vehicle interior temperature set by an occupant and an actual vehicle interior temperature becomes greater than a preset value, driving of the compressor of the air conditioner is resumed.

In Patent Document 3, when the inlet air temperature of an air conditioner is equal to or lower than a preset temperature after an engine is automatically stopped, the engine is instantly started, and when the inlet air temperature of the air conditioner is higher than the preset temperature, the automatic stop duration time of the engine is compared with an upper limit of an automatic stop execution time, and if the automatic stop duration time exceeds the upper limit of the automatic stop execution time, the engine is started.

In Patent Document 4, idling stop is permitted when the coolant temperature detected by a coolant temperature sensor becomes equal to or higher than an idling stop start coolant temperature.

Patent Document 5 discloses a technique of automatically stopping an engine for a predetermined period when the temperature of engine cooling water becomes equal to or higher than a predetermined temperature during the stop of a vehicle and the operation of an air conditioner.
Patent Document 1: JP-A-2006-240459
Patent Document 2: JP-A-2000-179374
Patent Document 3: Japanese Patent No. 3870904
Patent Document 4: JP-A-2001-263123
Patent Document 5: JP-A-2005-247107

Further relevant prior art documents are: US2004/0149246 and US2004/0211381 The air conditioner uses cooling water of the engine as a heat source, performs heat exchange between the cooling water and the air from the blower fan to perform heating of blowing air. Immediately after the turn-on of the blower SW, the temperature of the blowing air from the air conditioner is low, and is increased gradually over a predetermined time period. For example, in the sections of the timing a to d shown in Fig. 2, the blowoff port temperature is increased gradually and is in an unstable state.

When the blower SW is turned on immediately before shifting to the economical running, there is a possibility of shifting to an economical running state in a state where the engine has not yet reached a stable blowoff port temperature when the blower continues to be driven under a current condition (such as the engine water temperature and outside air temperature). In such a case, the temperature at which the engine is turned on may be set to a lower temperature than a temperature to be originally set.

The engine is still rotating since the engine is in a state immediately before shifting to the idling stop state, and even if the engine mode shifts to the idling stop state, the blowoff port temperature is increased (for example, refer to the sections c to d of Fig. 2(C)).

For example, in the example shown in Fig. 2, it is preferable to stop the economical running at 37°C which has been reduced by 8°C from 45°C that is a stable blowoff port temperature when the blower continues to be driven, and turn on the engine. However, since it takes about several tens of seconds until the blowoff port temperature becomes stable after the blower SW is turned on, if 30°C that is a temperature acquired before the blowoff port temperature becomes stable is set to the blowoff port temperature, 22°C obtained by subtracting 8°C from 30°C may be erroneously set to a temperature at which the engine is turned on. For this reason, the engine is not started unless the blowoff port temperature of the heater is reduced to 22°C from 45°C. For this reason, the occupant should endure coldness, or turn on the engine manually.

Additionally, although the temperature of the cooling water is measured by a water temperature sensor, this water temperature sensor is provided on a cooling path of the cooling water in which a radiator, a mechanical water pump, etc. are provided. Since the engine stops during the economical running control, the operation of the mechanical water pump which uses the engine as a driving source also stops. Accordingly, the temperature change of the cooling water on the cooling path measured by the water temperature sensor is small during the economical running control.

On the other hand, the temperature change of the cooling water on a path for heating for utilizing a part of the cooling water for vehicle interior heating becomes large because heat is lost from the blower fan to the blowing air. The rate of temperature reduction of the cooling water fluctuates by the outside air temperature and the amount of blowing air of the blower fan.

Accordingly, if the engine mode is shifted to the economical running control immediately after the turn-on of the blower SW, a temperature difference is caused between the temperature of the cooling water on the cooling path and the temperature of the cooling water of the path for heating. The water temperature sensor can measure the temperature of the cooling water on the cooling path, but cannot measure the temperature of the cooling water on the side of the path for heating. For this reason, if the permission determination of the economical running control is performed based on only the engine water temperature measured by the water temperature sensor, there is a possibility that the blowing air of the air conditioner does not satisfy a predetermined temperature, and the heating performance during the economical running control cannot be satisfied.

### SUMMARY

It is therefore an object of at least one embodiment of the present invention to provide an engine control apparatus and an engine control method which can set a suitable temperature at which an engine is restarted from an idling stop state, and restart the engine before an occupant feels cold, even if an air conditioner is turned on immediately before an engine stop control.

It is another object of at least one embodiment of the present invention to provide an engine control apparatus, an engine control method which can perform and engine automatic stop control while sufficiently satisfying the air conditioning performance of an air conditioner.

In order to achieve the above described object, according to a first aspect of at least one embodiment of the present invention, there is provided an engine control apparatus which is configured to perform an engine start control of automatically starting an engine mounted on a vehicle when the engine has stopped by an engine stop control of automatically stopping the engine, the engine control apparatus comprising: a start condition setting section which is configured to set an engine start condition for automatically starting the engine based on a blowoff temperature that is a temperature of air blown off from an air conditioner mounted on the vehicle at a predetermined time point if the air conditioner is being operated when the engine is automatically stopped by the engine stop control; and an engine start control section which is configured to instruct to start the engine if the engine start condition is satisfied, wherein if the blowoff temperature is increased after the engine start condition is set, the start condition setting section resets the engine start condition based on the increased blowoff temperature.

If the engine start condition for starting the engine remains low in a case where the blowoff temperature of the air conditioner has changed to the increase side, the temperature difference between the increased blowoff temperature and the engine start condition becomes large. That is, the engine is not automatically started unless the blowoff temperature is reduced greatly. For this reason, an occupant may feel cold. Thus, the engine can be restarted before the occupant feels cold by changing the engine start condition according to the increased blowoff temperature.

The start condition setting section may hold a peak temperature of the blowoff temperature and reset the engine start condition based on the peak temperature.

Accordingly, the temperature at which the engine is automatically restarted can be set to a suitable temperature according to the temperature increase of the air conditioner, and the engine can be restarted before an occupant feels cold.

The start condition setting section may reset the engine start condition based on the increased blowoff temperature until a predetermined time period has lapsed after the engine is automatically stopped by the engine stop control and may not reset the engine start condition after the predetermined time period has lapsed.

Accordingly, when the air conditioner is turned on immediately before performing the engine stop control, the temperature at which the engine is automatically restarted can be set to a suitable temperature according to the temperature increase of the air conditioner while the blowoff temperature is increased immediately after turning on the air conditioner, Additionally, since the blowoff temperature become stable after the predetermined time period has lapsed from the turn-on operation of the air conditioner, the temperature at which the engine is automatically restarted can be fixed, and the engine start control can be simplified.

The start condition setting section may reset the engine start condition if the air conditioner is being operated. When the air conditioner is being operated, the engine can be started before the blowoff temperature of the air conditioner is reduced.

The start condition setting section may reset the engine start condition based on the increased blowoff temperature and at least one of an outside air temperature and a vehicle interior temperature.

Accordingly, the temperature at which the engine is automatically restarted can be reset based on not only the increased blowoff temperature but also at least one of the outside air temperature and the vehicle interior temperature, and the engine can be restarted before the occupant feels cold.

The start condition setting section may compare a first threshold obtained based on the blowoff temperature with a second threshold obtained based on at least one of the outside air temperature and the vehicle interior temperature, and reset the engine start condition based on one of the first threshold and the second threshold, which is lower than another in temperature.

Since the engine is automatically restarted when both of the blowoff temperature and at least one of the outside air temperature and the vehicle interior temperature is reduced below the respective thresholds, the engine can be restarted when the possibility that the occupant feels cold is high.

The engine start control section may instruct to start the engine based on the second threshold obtained based on at least one of the outside air temperature and the vehicle interior temperature in a case where an operation for operating the air conditioner is performed during the engine stop control. According to the outside air temperature or the vehicle interior temperature, the engine can be immediately restarted.

The engine start control section may instruct to start the engine in a case where an operation for operating the air conditioner is performed during the engine stop control.

Since the operation for operating the air conditioner is performed during the engine stop control, the possibility that a user may feel cold is high. Thus, the engine can be immediately restarted to increase the temperature of air blown from the air conditioner.

The engine control apparatus may further comprise: a first temperature condition setting section which is configured to set a first blowoff temperature condition based on the blowoff temperature at the predetermined time point; and a second temperature condition setting section which is configured to set a second blowoff temperature condition based on an outside air temperature at a predetermined time point, and the start condition setting section may set the engine start condition based on the first blowoff temperature condition and the second blowoff temperature condition.

The engine control apparatus may be configured to be mounted on the vehicle having the air conditioner which warms up interior of the vehicle by using heat of cooling water for cooling the engine.

The engine control apparatus may be configured to perform the engine stop control of automatically stopping the engine if a predetermined stop condition is satisfied and perform the engine start control of automatically starting the engine if a predetermined restart condition is satisfied during the engine stop control, and the engine control apparatus may further comprise an engine stop control section which is configured to instruct to stop the engine if an engine water temperature is equal to or higher than a predetermined value and the predetermined stop condition is satisfied.

According to a second aspect of at least one embodiment of the present invention, there is provided a vehicle control system, comprising: a start condition setting section which is configured to set an engine start condition for automatically starting an engine mounted on a vehicle based on a blowoff temperature that is a temperature of air blown off from an air conditioner mounted on the vehicle at a predetermined time point if the air conditioner is being operated when the engine is automatically stopped by an engine start control; an economical running control device including an engine start control section which is configured to instruct to start the engine if the engine start condition is satisfied; and an engine control device which is configured to perform an engine start control of automatically starting the engine, wherein if the blowoff temperature is increased after the engine start condition is set, the start condition setting section resets the engine start condition based on the increased blowoff temperature.

According to a third aspect of at least one embodiment of the present invention, there is provided an engine control method, comprising: performing an engine stop control of automatically stopping an engine mounted on a vehicle; setting an engine start condition for automatically starting the engine based on a blowoff temperature that is a temperature of air blown off from an air conditioner mounted on the vehicle at a predetermined time point if the air conditioner is being operated when stopping the engine; if the blowoff temperature is increased after setting the engine start condition, resetting the engine start condition based on the increased blowoff temperature; and instructing to start the engine if the engine start condition is satisfied.

According to the above aspects, even if the air conditioner is turned on immediately before the engine stop control, the temperature at which the engine should be started can be set to a suitable temperature, and the engine can be restarted before the occupant feels cold.

According to a third aspect of at least one embodiment of the present invention, there is provided an engine control apparatus which is configured to perform an engine stop control of automatically stopping an engine mounted on a vehicle if a predetermined stop condition is satisfied and perform an engine start control of automatically starting the engine if a predetermined restart condition is satisfied during the engine stop control, the engine control apparatus comprising: an stop condition setting section which is configured to set an engine stop condition for automatically stopping the engine; an engine stop control section which is configured to instruct to stop the engine if the engine stop condition is satisfied; a start condition setting section which is configured to set an engine start condition for automatically starting the engine based on a blowoff temperature that is a temperature of air blown off from an air conditioner mounted on the vehicle if the air conditioner is being operated when the engine is automatically stopped by the engine stop control section; and an engine start control section which is configured to instruct to start the engine if the engine start condition is satisfied, wherein the engine stop condition set by the stop condition setting section includes a condition that the blowoff temperature is equal to or higher than a predetermined temperature if the air conditioner is being operated.

In a case where the air conditioner is being operated, the engine is automatically stopped on the condition that the blowoff temperature of the air conditioner is equal to or higher than a predetermined temperature. Accordingly, the engine can be automatically stopped by determining whether or not a heating performance of the air conditioner is sufficiently satisfied.

Additionally, since the condition for starting the engine is set based on the blowoff temperature of the air conditioner after the engine is automatically stopped, the engine can be restarted before the occupant feels cold.

In the above described engine control apparatus, the stop condition setting section may set, as the engine stop condition, a condition that a state where a temperature of cooling water is equal to or higher than a first threshold temperature and the blowoff temperature of the air conditioner is equal to or higher than a second threshold temperature is maintained for a predetermined time period or more.

Accordingly, the engine can be automatically stopped by accurately determining whether or not the air conditioning performance of the air conditioner is sufficiently satisfied during the engine stop control.

In the above described engine control apparatus, the start condition setting section may reset the engine start condition based on the blowoff temperature after the engine is stopped.

Since the condition for starting the engine can be reset according to the blowoff temperature after the engine is stopped, the engine can be restarted before the occupant feels cold.

In the above described engine control apparatus, if the blowoff temperature is increased after the engine start condition is set, the start condition setting section may reset the engine start condition based on the increased blowoff temperature.

If the engine start condition for starting the engine remains low in a case where the blowoff temperature of the air conditioner has changed to the increase side, the temperature difference between the increased blowoff temperature and the engine start condition becomes large. That is, the engine is not automatically started unless the blowoff temperature is reduced greatly. For this reason, an occupant may feel cold. Thus, the engine can be restarted before the occupant feels cold by changing the engine start condition according to the increased blowoff temperature.

In the above described engine control apparatus, the start condition setting section may hold a peak temperature of the blowoff temperature and reset the engine start condition based on the peak temperature.

Accordingly, the change of the blowoff temperature of the air conditioner can be exactly reflected on the engine start condition for starting the engine.

According to a fourth aspect of at least one embodiment of the present invention, there is provided an engine control apparatus which is configured to perform an engine stop control of automatically stopping an engine mounted on a vehicle if a predetermined stop condition is satisfied and perform an engine start control of automatically starting the engine if a predetermined restart condition is satisfied during the engine stop control, the engine control apparatus comprising: an stop condition setting section which is configured to set an engine stop condition for automatically stopping the engine; an engine stop control section which is configured to instruct to stop the engine if the engine stop condition is satisfied; a start condition setting section which is configured to set an engine start condition for automatically starting the engine based on a temperature of cooling water for cooling the engine and a blowoff temperature that is a temperature of air blown off from an air conditioner mounted on the vehicle if the air conditioner is being operated when the engine is automatically stopped by the engine stop control section; and an engine start control section which is configured to instruct to start the engine if the engine start condition is satisfied, wherein the engine stop condition set by the stop condition setting section includes a condition that the blowoff temperature is equal to or higher than a predetermined temperature if the air conditioner is being operated.

According to a fifth aspect of at least one embodiment of the present invention, there is provided an engine control method comprising: setting an engine stop condition for automatically stopping an engine mounted on a vehicle; instructing to stop the engine if the engine stop condition is satisfied; setting an engine start condition for automatically starting the engine based on a blowoff temperature that is a temperature of air blown off from an air conditioner mounted on the vehicle if the air conditioner is being operated when the engine is automatically stopped; and instructing to start the engine if the engine start condition is satisfied, wherein the engine stop condition includes a condition that the blowoff temperature is equal to or higher than a predetermined temperature if the air conditioner is being operated.

According to a sixth aspect of at least one embodiment of the present invention, there is provided an engine control apparatus which is configured to perform an engine stop control of automatically stopping an engine mounted on a vehicle if a predetermined stop condition is satisfied and perform an engine start control of automatically starting the engine if a predetermined restart condition is satisfied during the engine stop control, the engine control apparatus comprising: an stop condition setting section which is configured to predicts transition of an engine water temperature with the lapse of time in a case where the engine is stopped and set an engine stop condition for automatically stopping the engine based on the predicted transition of the engine water temperature; an engine stop control section which is configured to instruct to stop the engine if the engine stop condition is satisfied; a start condition setting section which is configured to set an engine start condition for automatically starting the engine based on a blowoff temperature that is a temperature of air blown off from an air conditioner mounted on the vehicle if the air conditioner is being operated when the engine is automatically stopped by the engine stop control section; and an engine start control section which is configured to instruct to start the engine if the engine start condition is satisfied.

Since the engine water temperature which is reduced with the stop of the engine becomes a parameter for determining whether or not the air conditioner can maintain its air conditioning performance during the engine stop control, whether or not the occupant may feel cold can be determined using the engine water temperature as the parameter, and when it is determined that the occupant may feel cold, the automatic stop control of the engine can be prohibited.

Additionally, since the engine start condition is set based on the temperature of the air blown off from the air conditioner during the engine is automatically stopped, the engine can be restarted before the occupant feels cold.

In the above described engine control apparatus, when the air conditioner is being operated, the stop condition setting section may predict the engine water temperature after a predetermined time period is lapsed from a time point at which the air conditioner is operated based on at least one of an outside air temperature measured by measuring means, a lapsed time from the time point at which the air conditioner is operated and an amount of air blown off from the air conditioner, and correct the predicted engine water temperature based on the amount of air blown off from the air conditioner to predict the transition of the engine water temperature with the lapse of time,

Accordingly, it is possible to accurately predict the transition of the engine water temperature with the lapse of time.

In the above described engine control apparatus, if the engine is stopped by the engine stop control section before the predetermined time period is lapsed, the start condition setting section may set the engine start condition based on a prediction value of the transition of the engine water temperature, which is calculated by the stop condition setting section until the predetermined time period is lapsed.

Accordingly, the engine start condition can be set based on the prediction value of the transition of the engine water temperature while the temperature of the air blown off from the air conditioner in an unstable state. For this reason, the engine can be started before the occupant feels cold.

In the above described engine control apparatus, the engine stop control section may instruct to stop the engine if a measurement value of the engine water temperature, which is measured by measuring means is higher than a prediction value of the engine water temperature, which is calculated by the stop condition setting section.

Accordingly, it is possible to instruct to stop the engine when it is determined that the engine water temperature is sufficiently high, and the air conditioning performance of the air conditioner is sufficiently satisfied.

In the above described engine control apparatus, the engine start control section may instruct to start the engine if a prediction value of the engine water temperature, which is calculated by the stop condition setting section becomes equal to or lower than a preset lowest engine water temperature or if a measurement value of the engine water temperature, which is measured by measuring means becomes equal to or lower than the prediction value of the engine water temperature.

Accordingly, it is possible to instruct to start the engine when it is determined that the engine water temperature is reduced, and the air conditioning performance of the air conditioner is not satisfied.

In the above described engine control apparatus, if the air conditioner is being operated, the start condition setting section may compares a first threshold calculated based on at least one of an outside air temperature and a vehicle interior temperature with a second threshold calculated based on the blowoff temperature, and sets the engine start condition as a threshold temperature based on one of the first threshold and the second threshold, which is lower than another in temperature, and the engine start control section may instruct to start the engine if the blowoff temperature becomes equal to or lower than the threshold temperature.

Accordingly, the engine can be returned from an stop state to an start state by using an optimal threshold.

In the above described engine control apparatus, if the air conditioner is being operated, the stop condition setting section may predict a time period from a time point at which the air conditioner is operated to a time point at which a measurement value of the blowoff temperature, which is measured by measuring means is increased to a peak value, based on at least one of an outside air temperature and the engine water temperature, and predicts the transition of the engine water temperature within the predicted time period.

Accordingly, the time period when the temperature of air blown off from the air conditioner is in an unstable state can be predicted with high precision.

According to a seventh aspect of at least one embodiment of the present invention, there is provided an engine control apparatus which is configured to perform an engine stop control of automatically stopping an engine mounted on a vehicle if a predetermined stop condition is satisfied and perform an engine start control of automatically starting the engine if a predetermined restart condition is satisfied during the engine stop control, the engine control apparatus comprising: a prohibition condition setting section which is configured to prohibits stopping the engine until a predetermined time period is lapsed after a time point at which the air conditioner is operated if the air conditioner is being operated when the engine is stopped; an engine stop control section which is configured to instruct to stop the engine after the predetermined time period is lapsed; a start condition setting section which is configured to set an engine start condition for automatically starting the engine based on a blowoff temperature that is a temperature of air blown off from an air conditioner mounted on the vehicle if the air conditioner is being operated when the engine is automatically stopped by the engine stop control section; and an engine start control section which is configured to instruct to start the engine if the engine start condition is satisfied.

Since the temperature of air blown off from an air conditioner does not satisfies the heating performance during the predetermined time period after the air conditioner is set to an operation state, the deterioration of the air conditioning performance of the air conditioner during the engine stop control can be suppressed by prohibiting stopping the engine.

According to a seventh aspect of at least one embodiment of the present invention, there is provided an engine control method for performing an engine stop control of automatically stopping an engine mounted on a vehicle if a predetermined stop condition is satisfied and performing an engine start control of automatically starting the engine if a predetermined restart condition is satisfied during the engine stop control, the engine control method comprising: predicting transition of an engine water temperature with the lapse of time in a case where the engine is stopped; setting an engine stop condition for automatically stopping the engine based on the predicted transition of the engine water temperature; instructing to stop the engine if the engine stop condition is satisfied; setting an engine start condition for automatically starting the engine based on a blowoff temperature that is a temperature of air blown off from an air conditioner mounted on the vehicle if the air conditioner is being operated when the engine is automatically stopped; and instructing to start the engine if the engine start condition is satisfied.

According to a seventh aspect of at least one embodiment of the present invention, there is provided an engine control method for performing an engine stop control of automatically stopping an engine mounted on a vehicle if a predetermined stop condition is satisfied and performing an engine start control of automatically starting the engine if a predetermined restart condition is satisfied during the engine stop control, the engine control method comprising: prohibiting stopping the engine until a predetermined time period is lapsed after a time point at which the air conditioner is operated if the air conditioner is being operated when the engine is stopped; instructing to stop the engine after the predetermined time period is lapsed; setting an engine start condition for automatically starting the engine based on a blowoff temperature that is a temperature of air blown off from an air conditioner mounted on the vehicle if the air conditioner is being operated when the engine is automatically stopped by the engine stop control section; and instructing to start the engine if the engine start condition is satisfied.

According to the invention, the automatic engine stop control can be performed so that the air conditioning performance of the air conditioner is sufficiently satisfied.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a schematic view illustrating an example of the communication between an economical running ECU and an engine ECU;
Fig. 2 is a view illustrating a related art control procedure of the economical running ECU when a blower SW is turned on immediately before shifting to an economical running mode;
Fig. 3 is a view illustrating an example of a map which determines blowoff port temperature which turns on an engine from outside air temperature;
Fig. 4 is a view illustrating the configuration of a vehicle control system;
Fig. 5 is a view illustrating the hardware configuration of a microcomputer;
Fig. 6 is a view illustrating a circulating path of cooling water which cools the engine, and the configuration of a heater which warms up the interior of a vehicle;
Fig. 7 is a view illustrating the control procedure of the economical running ECU when the blower SW is turned on immediately before shifting to the economical running mode, especially, a control procedure when the engine is restarted from the economical running mode;
Fig. 8 is a view illustrating the control procedure of the economical running ECU when the blower SW is turned on after shifting to the economical running mode, especially, the control procedure when the engine is restarted from the economical running mode;
Fig. 9 is a view illustrating the control procedure of the economical running ECU when the vehicle has stopped after the blower SW is turned on, especially, the control procedure of the economical running ECU when the engine is restarted in the economical running mode;
Fig. 10(A) is a view illustrating a map which predicts the time T [sec] when the blowoff port temperature is settled from the outside air temperature, Fig. 10(B) is a view illustrating a map which predicts T [sec] from engine water temperature, and Fig. 10(C) is a view illustrating a map which corrects T [sec] according to a blower level;
Fig. 11(A) is a view illustrating a map which calculates a prediction value from the outside air temperature, Fig. 11(B) is a view illustrating a map which corrects a prediction value from the lapsed time after turn-on of the blower SW, and Fig. 11(C) is a view illustrating a map which corrects a prediction value from a blower level;
Fig. 12(A) is a view illustrating a method of determining whether or not the engine mode is returned to an engine start state based on a prediction value X, and Fig. 12(B) is a view illustrating a method of determining whether or not the engine mode is returned to an engine start state based on the prediction value X, and an actual measurement value of the engine water temperature;
Fig. 13 is a view illustrating a first control procedure of the economical running ECU when the blower SW is turned on immediately before shifting to an idling stop state; and
Fig. 14 is a view illustrating a second control procedure of the economical running ECU when the blower SW is turned on immediately before shifting to the idling stop state.

### DETAILED DESCRIPTION OF THE EMBODIMENTS

Embodiments of the invention will be described with reference to the accompanying drawings.

### [Embodiment 1]

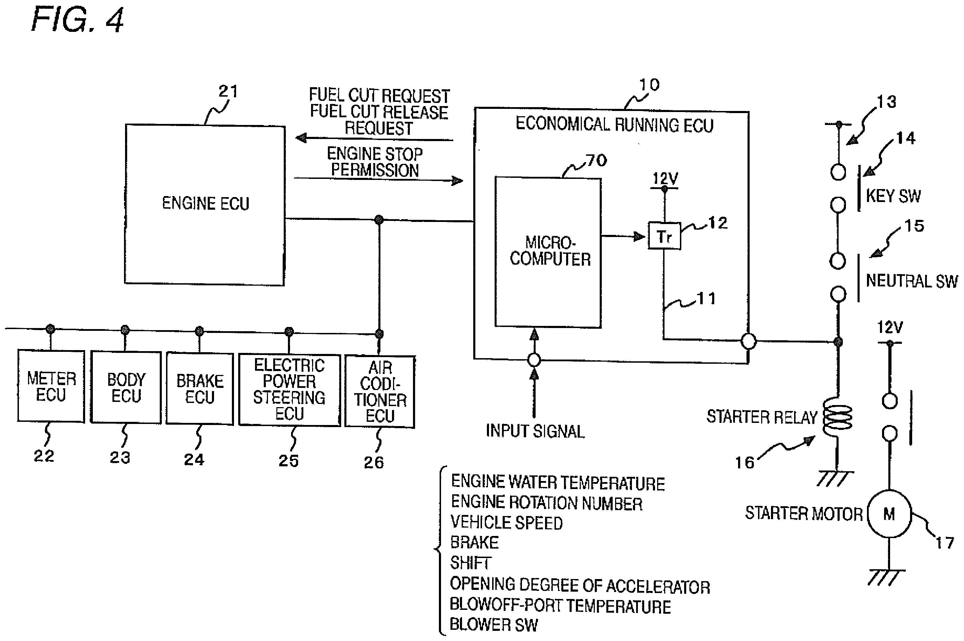

First, the configuration of this embodiment will be described referring to Fig. 4. In addition, "economical running" in this specification is defined to have the meaning of both or any one of "economical running" and "ecological running". The "economical" means suppressing consumption of fuel to save the fuel (fuel consumption saving). Additionally, the "ecological" means suppressing the consumption of a fossil fuel or suppressing the generation or emission of harmful substances or carbon dioxide generated by the combustion, etc. of the fossil fuel.

In the vehicle control system shown in Fig. 4, a plurality of ECUs, such as an economical running ECU 10, an engine ECU 21, a meter ECU 22, a body ECU 23, a brake ECU 24, an electric power steering ECU 25, an air conditioner ECU 26, etc. are connected to communication buses.

The plurality of ECUs performs communication according to a communication protocol, such as CAN (Controller Area Network).

The engine ECU 21 is connected to an EFI (Electronic Fuel Injection), which electronically controls the injection amount of fuel to the engine, to control engine output and adjust the running speed of the vehicle.

Additionally, when the number of rotations of the engine is an idling speed, the engine ECU 21 outputs an engine stop permission signal to the economical running ECU 10.

Additionally, the engine ECU 21 cuts the supply of fuel to the engine according to a fuel cut request from the economical running ECU 10. Moreover, if a fuel cut release request is output from the economical running ECU 10, fuel is supplied to the engine according to this request.

The meter ECU 22 receives a detection signal from various sensors (not shown), and executes various operations, etc., thereby generating the output for performing displays, such as vehicle speed display, engine rotation number display, shift position display, fuel remaining amount display, and water temperature display.

The body ECU 23 controls mechanisms mounted on the vehicle, such as a door lock mechanism and an automatic window mechanism.

The brake ECU 24 actuates brakes, such as a disc brake and a drum brake, to electronically control deceleration, stop, etc. of the vehicle.

The electric power steering ECU 25 controls driving of a driving motor of a steering system according to the amount of the rotational angle of an operating lever sent from a rotational angle sensor.

The air conditioner ECU 26 drives a compressor based on a driver's request, the running state of the vehicle, etc., to carry out air conditioning control.

The economical running ECU 10 serves as a stop condition setting section, an engine stop control section, a start condition setting section, a first temperature condition setting section, a second temperature condition setting section, and an engine start control section. Specifically, the economical running ECU 10 receives information for determining an automatic stop condition and an automatic start condition from the engine ECU 21, other various sensors (not shown), etc, and carries out the economical running control (the details of this control will be described later) of automatically stopping if the automatic stopping condition is satisfied when the engine is operated, and activating a starter motor to start the engine if the automatic start condition is satisfied at the time of the stop of the engine.

Additionally, the economical running ECU 10 includes an input terminal which inputs signals from various sensors, and inputs from the input terminal a brake signal which indicating that a brake is in an operation state, a shift signal indicating the shift position of a transmission, a vehicle speed signal indicating vehicle speed, an accelerator opening ratio signal indicating the opening ratio of an accelerator, an engine rotation number signal indicating the number of rotations of the engine, a voltage signal indicating the voltage of a battery, an engine water temperature signal indicating the temperature of engine cooling water, etc. Additionally, a signal indicating the engine water temperature measured by an engine water temperature sensor 34 which will be described later, a blower SW signal indicating the blowoff port temperature measured by a blowoff port temperature sensor 43, and a signal indicating turn-on or turn-off of a blower SW are input to the economical running ECU 10.

Additionally, the economical running ECU 10 turns on a transistor 12 shown in Fig. 4, thereby driving a starter motor 17.

A power supply line 11 from the battery is connected via the transistor 12 to a wiring line 13 to which a starter switch (hereinafter referred to as key SW) 14 which is operated by an ignition key, a neutral switch (hereinafter referred to as neutral SW) 15, and a starter relay 16 are connected. If the transistor 12 is turned on by the microcomputer 70 of the economical running ECU 10, an electric current is applied to a coil of the starter relay 16, thereby turning on the starter relay 16. If the starter relay 16 is turned on, the electric power from the battery is supplied to the starter motor 17, and the engine is started by the operation of the starter motor 17.

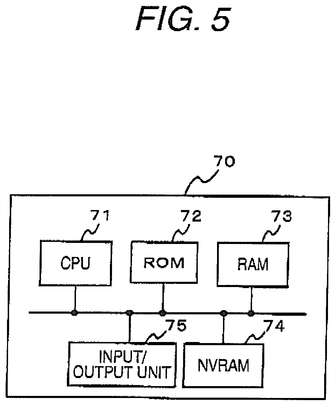

The hardware configuration of the microcomputer 70 of economical running ECU 10 is shown in Fig. 5. The microcomputer 70 has a CPU 71, a ROM 72, a RAM 73, an NVRAM (Nonvolatile RAM)74, an I/O unit 75, etc. The CPU 71 reads a program stored in the ROM 72 to perform an operation according to this program. That is, as the CPU 71 reads the program stored in the ROM 72, the economical running control which will be described later is carried out. Additionally, the data of operation results is written in the RAM 73, and the data which requires saving at the time of power-off is written in the NVRAM 74 by the data written in the RAM 73.

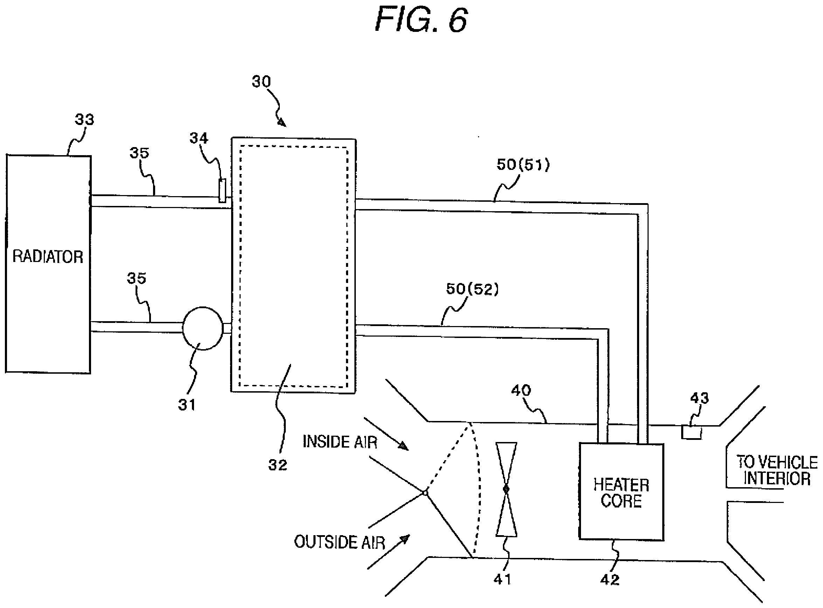

Fig. 6 shows a circulating path of cooling water which cools the engine 30, and the configuration of a heater (air conditioner) 40 which warms up the interior of a vehicle. The circulating path of cooling water consists of a cooling path 35 which cools cooling water, and a heater path 50 for utilizing a portion of cooling water for vehicle interior heating.

The cooling path 35 is provided with a water pump 31 which pumps cooling water, a water jacket 32 within a cylinder block and a cylinder head, a radiator 33 that is a heat exchanger, etc. Additionally, the cooling path 35 is provided with an engine water temperature sensor 34 which detects the temperature of the cooling water which flows out of the engine. The engine water temperature measured by the engine water temperature sensor 34 is output to the economical running ECU 10.

The heater path 50 has a first flow passage 51 which makes the cooling water which has passed through the engine 30 flow into a heater core 42, and a second flow passage 52 which returns the cooling water which flows out of the heater core 42 to a cooling-water path. In the heater core 42, a heat exchange is performed between high-temperature cooling water which has flowed into the core via the first flow passage 51, and the air from the blower fan 41 of the heater 40, and the heated air is utilized for heating of the vehicle interior by this heat exchange. The blowoff port temperature sensor 43 which measures the temperature of warm air is provided in the vicinity of the blowoff port of a duct which conducts the warm air of the heater 40 into the vehicle interior, and the economical running ECU 10 acquires the blowoff port temperature measured by the blowoff port temperature sensor 43.

In addition, the attachment position of the blowoff port temperature sensor 43 is provided in a gathering portion before branching to each blowoff port which sends blowing air to the vehicle interior in an example shown in Fig. 6. In addition to this, the blowoff port temperature sensor 43 may be provided in a portion after being branched to a path to each blowoff port. Additionally, the blowoff port temperature sensor may be provided in at least one portion after being branched to a path to each blowoff port.

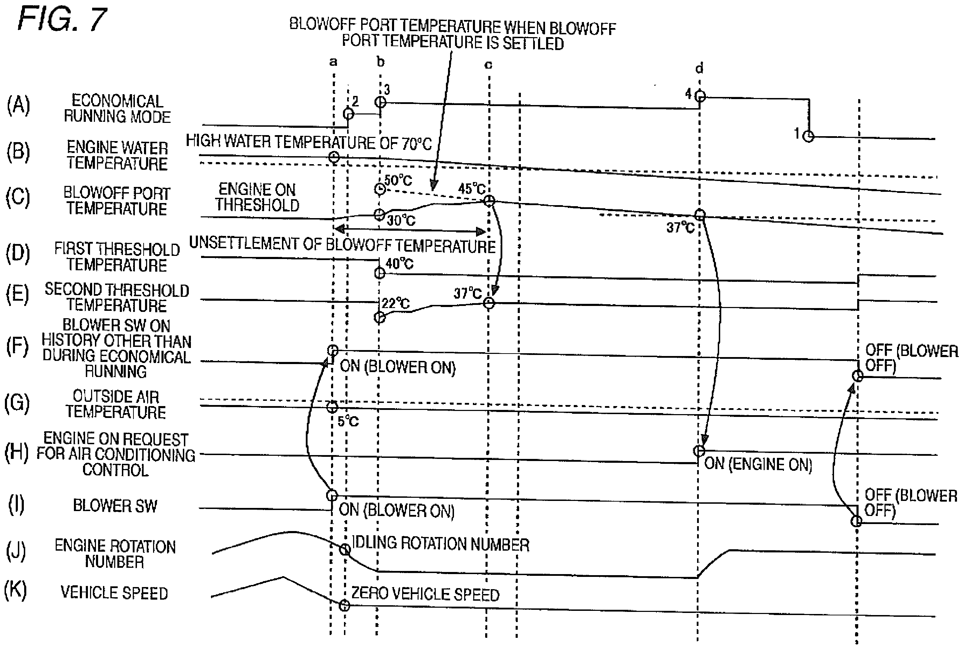

Next, the control procedure of the economical running ECU 10 when the blower SW is turned on immediately before shifting to an economical running mode will be described referring to Fig. 7.

It is assumed that an idling stop condition is satisfied, the blower SW is turned on immediately before shifting to an "idling stop preparation state" that is a second state (refer to Fig. 7(I)). If the blower SW is turned on, a blower motor (not shown) starts driving, and the blowing air by a blower fan 41 is blown into the vehicle interior. It should be noted herein that, during predetermined time after the turn-on of the blower SW, the change of the blowoff port temperature measured by the blowoff port temperature sensor 43 is in a state which is not greatly stabilized (sections of the times a to c shown in Fig. 7).

If the blower SW is turned on, the economical running ECU 10 first determines the engine water temperature. It is assumed that the engine water temperature at this time is a high temperature of, for example, 70°C (refer to the temperature at the time a of the engine water temperature of Fig. 7(B)). The economical running ECU 10 determines that the engine water temperature is high and it is not necessary to turn on the engine for the heater, and permits an economical running. If shifting to the economical running mode is permitted, shifting to the "idling stop preparation state" that is the second state is made. Here, the economical running ECU 10 requests a fuel cut to the engine ECU 21.

In addition, figures shown in the economical running mode of Fig. 7(A) indicate the economical running mode. For example, "2" indicate a second state, and "3" indicate a third state.

If the engine ECU 21 performs the fuel cut, and shifts to the "idling stop state" that is a third state, the economical running ECU 10 acquires the blowoff port temperature of the blower fan 41 measured by the blowoff port temperature sensor 43, to record the temperature in the RAM 73.

Additionally, the economical running ECU 10 acquires the outside air temperature measured by the outside air temperature sensor (not shown), and records the acquired outside air temperature in the RAM 73.

Next, the economical running ECU 10 determines the blowoff temperature of the blower fan 41 at which it is necessary to turn on the engine with reference to a map at the time of the acquired outside air temperature (engine ON blowoff temperature obtained from the map shown in Fig. 3). This temperature is hereinafter referred to as a first threshold temperature. In the example shown in Fig. 7, since the outside air temperature measured by the outside air temperature sensor is 5°C (refer to Fig. 7(G)), the economical running ECU 10 sets the first threshold temperature to 40°C with reference to a map (refer to the timeing b of Fig. 7(D)).

Additionally, the economical running ECU 10 sets a value, which is obtained by subtracting a predetermined temperature (for example, whcih is set to 8°C in this embodiment) from the blowoff port temperature of the blower fan acquired when shifting to the "idling stop state" that is the third state has been made, to a second threshold temperature (refer to the timing b of Fig. 7(E)). The economical running ECU 10 of this embodiment holds the peak of the blowoff port temperature measured by the blowoff port temperature sensor 43. That is, whenever the maximum value of the blowoff port temperature is updated, this maximum value is set to the blowoff port temperature. Additionally, with the change in the blowoff port temperature, the second threshold temperature also changes whenever necessary. In the example shown in Fig. 7, since the blowoff port temperature at the start of the economical running was 30°C, the second threshold temperature is set to 22°C. However, since the blowoff port temperature becomes 45°C, at the timing c shown in Fig. 7, the second threshold temperature is also set to 37°C. In addition, the time c shown in Fig. 7 is a point where the blowoff port temperature is increased, and then, changes while the blowoff port temperature is reduced until the engine is started. Additionally, a dotted line of the blowoff port temperature shown in the section of the timing b to c of Fig. 7 shows transition of the blowoff port temperature when shifting to the economical running control has been made after sufficient time has lapsed after the blower SW is turned on.

Next, the economical running ECU 10 compares the first threshold temperature with the second threshold temperature to set a lower temperature to the engine ON threshold temperature. Here, the reason why a lower temperature is set to a threshold where the engine is started is because, although there is a hope to remain in the idling stop state as long as possible, it can be determined that the possibility that an occupant feels cold is high when both of a temperature at which a person may feel cold based on the outside air temperature and a temperature at which the person may feel cold based on the amount of temperature is reduced below an actual temperature.

At the start of the economical running, since the blowoff port temperature was 30°C, 22°C that is the second threshold temperature is set to an engine ON threshold. Thereafter, however, since several tens of seconds are taken until the blowoff port temperature becomes stable after the blower SW is turned on, the blowoff port temperature is increased gradually. Since the peak of the peak value of the blowoff port temperature of the economical running ECU 10 is held, the engine ON threshold is also changed in keeping with the increase in the blowoff port temperature. At the time c shown in Fig. 7, the engine ON threshold is set to 37°C.

Thereafter, the economical running ECU 10 monitors the blowoff port temperature of the blower fan, and turns on the engine to shift the engine mode to a fourth state that is an "engine start state" (refer to the timing d shown in Fig. 7) if the blowoff port temperature is reduced below 37° C that is the engine ON threshold.

That is, if it is determined that restart of the engine is needed, the economical running ECU 10 requests driving of the engine by the starter motor to the engine ECU 21. The engine ECU 21 determines whether or not the starter driving request from the economical running ECU 10 is permitted according to the number of rotations of the engine. If a permission signal which permits starter driving is input from the engine ECU 21, the economical running ECU 10 turns on the transistor 12 shown in Fig. 4 to drive the starter motor 17.

As such, in this embodiment, if the heater 40 is operating when the engine is stopped, the blowoff port temperature of the air conditioner is measured, and if the blowoff temperature has been increased, a blowoff temperature condition for automatically starting the engine is reset based on the temperature which has been increased. Accordingly, even if the heater 40 is turned on immediately before the engine stop control, the temperature at which the engine is started can be set to a suitable temperature, and the engine can be restarted before an occupant feels cold.

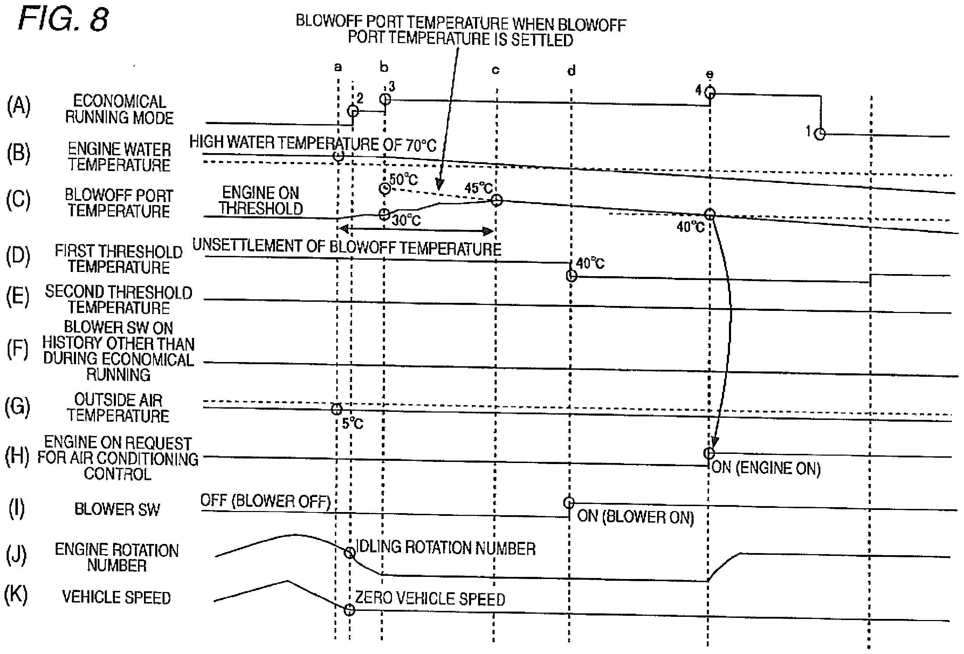

Additionally, when the blower SW is turned on after shifting to the "idling stop state" that is the third state, as shown in Fig. 8, the first threshold temperature obtained based on at least any one of the outside air temperature and the vehicle interior temperature may be immediately set to the engine ON threshold, without performing the comparison with the first threshold temperature with the second threshold temperature. Additionally, if the blower SW is turned on after shifting to the third state, the engine may be started immediately. If the blower SW is turned on when the state of the vehicle is in the third state, a user feels cold. For this reason, since the economical running ECU 10 restrains the time that is taken until the engine 30 is started by the second threshold temperature, i.e., the blowoff port temperature of warm air from being lengthened, the engine is immediately turned on if the outside air temperature is low.

Additionally, in the embodiment described above, the first threshold temperature is calculated on the outside air temperature measured by the outside temperature sensor. However, a temperature sensor can be provided in the vehicle interior, and the first threshold temperature can be set based on the vehicle interior temperature measured by the temperature sensor.

In addition, in the embodiment described above, the determination whether or not the economical running is performed by the engine water temperature, whereas the determination whether or not the engine start is performed during the economical running is performed by using the blowoff port temperature of the blower. This is because, although the performance of the present heater can be more accurately estimated by the engine water temperature, it is impossible to accurately measure the engine water temperature near the heater if the engine stops, and a water pump for circulating engine cooling water has stopped. Additionally, when at least one condition of two conditions that, the engine water temperature is equal to or higher than a predetermined temperature and that the blowoff port temperature measured by the blowoff port temperature sensor 43 is equal to or higher than a predetermined temperature is satisfied, the economical running ECU 10 permits idling stop to stop the engine.

### [Embodiment 2]

A second embodiment of the invention will be described referring to the accompanying drawings. In addition, since the configuration of the second embodiment is the same as that of the first embodiment, detailed description thereof is omitted.

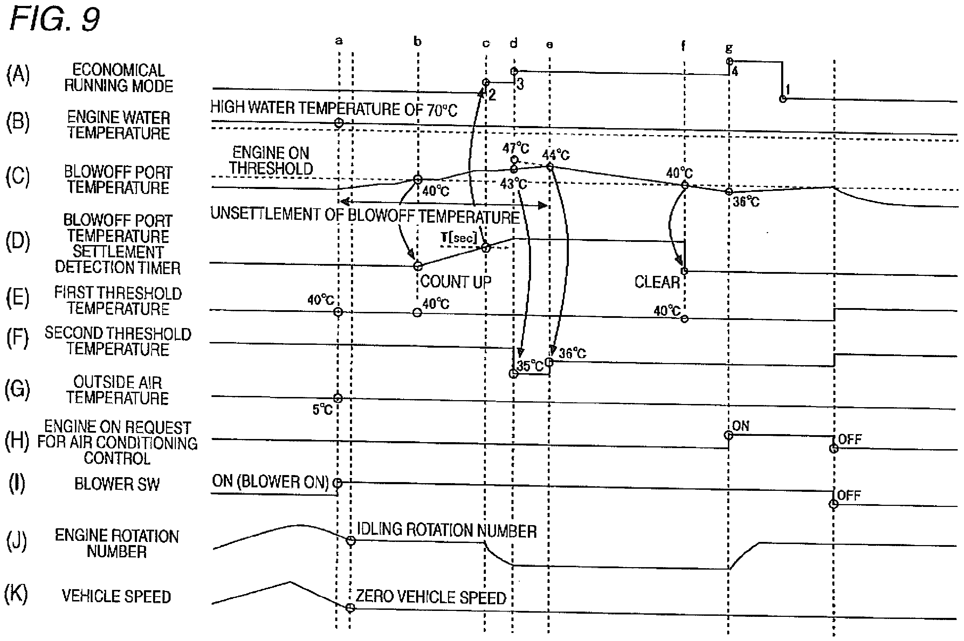

The control procedure of the economical running ECU 10 when the blower SW is turned on immediately before shifting to an economical running mode will be described referring to Fig. 9.

It is assumed that an idling stop condition is satisfied, the blower SW is turned on immediately before shifting to an "idling stop preparation state" that is the second state (refer to the timing a of Fig. 9(I)). If the blower SW is turned on, the blower motor (not shown) starts driving, and the blowing air by the blower fan 41 is blown into the vehicle interior. It should be noted herein that, during predetermined time after the turn-on of the blower SW, the change of the blowoff port temperature measured by the blowoff port temperature sensor 43 is in a state which is not greatly stabilized (sections of the times a to e shown in Fig. 9).

If the blower SW is turned on, the economical running ECU 10 first determines the engine water temperature. It is assumed that the engine water temperature at this time is a high temperature of, for example, 70°C (the engine water temperature is shown in Fig. 9(B)),

Additionally, the economical running ECU 10 acquires the outside air temperature measured by the outside air temperature sensor (not shown). If the outside air temperature is acquired, the economical running ECU 10 obtains the blowoff port temperature of the blower fan 41 at which, it is necessary to turn on the engine at the acquired outside air temperature with reference to the map shown in Fig. 3. This temperature is hereinafter referred to as a first threshold temperature. In the example shown in Fig. 9, since the outside air temperature measured by the outside air temperature sensor is 5°C (refer to Fig. 9(G)), the economical running ECU 10 sets the first threshold temperature to 40°C with reference to a map (refer to the timing a of Fig. 9(E)).

Next, the economical running ECU 10 acquires the blowoff port temperature of the warm air measured by the blowoff port temperature sensor 43, and measures the blowoff port temperature with the first threshold temperature. In the example shown in Fig. 9, since the first threshold temperature is set to 40°C, the economical running ECU 10 determines whether or not the blowoff port temperature measured by the blowoff port temperature sensor 43 has reached 40°C. In the example shown in Fig. 9, the blowoff port temperature shown in Fig. 9(C) reaches 40°C at the timing b.

If the blowoff port temperature reaches 40°C, the economical running ECU 10 starts counting of a blowoff port temperature settlement detection timer shown in Fig. 9(D). This blowoff port temperature settlement detection timer starts counting if the blowoff port temperature is equal to or higher than the first threshold temperature, and ends counting if the blowoff port temperature is reduced below the first threshold temperature.

In this embodiment, the economical running ECU 10 sets two conditions as conditions which permit the economical running.

A first condition is that the engine water temperature is equal to or higher than a predetermined temperature, and a second condition is that the state where the blowoff port temperature is equal to or higher than a first threshold lasts for a predetermined time or more.

As a material which determines only whether or not the engine water temperature measured by the water temperature sensor 34 is equal to or higher than a predetermined temperature, if it is determined whether or not the shifting to the economical running control is permitted, the blowing air of the heater 40 may not reach a predetermined temperature, and thus, a state where the heating performance during the economical running control cannot be satisfied may occur.

For this reason, in this embodiment, the temperature of a blowoff port is measured by the blowoff port temperature sensor 43 provided near the blowoff port of a duct which conducts blowing air into the vehicle interior, and the economical running ECU 10 determines whether or not the state where the blowoff port temperature is equal to or higher than the first threshold lasts for a predetermined time.

Since the first threshold temperature is the blowoff port temperature of the blower fan at which, it is necessary to turn on the engine determined according to the outside air temperature, if the blowoff port temperature is equal to or higher than the first threshold temperature, the heater 40 can satisfy its heating performance even during the economical running control.

In addition, in this embodiment, as the second condition, it is determined whether or not the state where the blowoff port temperature is equal to or higher than the first threshold has been last for a predetermined time or more. However, when the blowoff port temperature has been increased to a temperature equal to or higher than the first threshold, it may be determined that the second condition has been satisfied.

If a counted number of the blowoff port temperature settlement detection timer reaches T [sec], and the engine water temperature is equal to or higher than a predetermined temperature (refer to the timing c of Fig. 9(D)), the economical running ECU 10 permits the shifting to the economical running control. If the shifting to the economical running mode is permitted, shifting to the "idling stop preparation state" that is the second state (refer to the timing c of Fig. 9(A)) is performed. Here, the economical running ECU 10 requests a fuel cut to the engine ECU 21.

If the engine ECU 21 performs the fuel cut, and shifts to the "idling stop state" that is the third state (refer to the timing d of Fig. 9(A)), the economical running ECU 10 acquires the blowoff port temperature of the blower fan 41 measured by the blowoff port temperature sensor 43. Then, the economical running ECU 10 sets a value, which is obtained by subtracting a predetermined temperature (for example, whcih is set to 8°C in this embodiment) from the acquired blowoff port temperature of the blower fan, to a second threshold temperature (refer to the timing d of Fig. 9(F)).

The economical running ECU 10 of this embodiment holds the peak of the blowoff port temperature measured by the blowoff port temperature sensor 43. That is, whenever the maximum value of the blowoff port temperature is updated, this maximum value is set to the blowoff port temperature. Additionally, with the change in the blowoff port temperature, the second threshold temperature also changes whenever necessary. In the example shown in Fig. 9, since the blowoff port temperature when shifting to the "idling stop state" that is the third state has been made was 43°C, the second threshold temperature is set to 35°C. Thereafter, since the port temperature is 44°C at the timing e shown in Fig. 9 that is a time point where the blowoff port temperature is increased, and then, changes while the blowoff temperature is reduced until the engine is started, the second threshold temperature is also updated to 36°C.

Next, the economical running ECU 10 compares the first threshold temperature with the second threshold temperature to set a lower temperature to the engine ON threshold temperature.

At the time of shifting to the third state, since the blowoff port temperature was 43°C (refer to the timing d of Fig. 9(C)), 35°C that is the second threshold temperature is set to an engine ON threshold. Thereafter, since the blowoff port temperature is increased gradually, and the economical running ECU 10 holds the peak of the peak value of the blowoff port temperature, the engine ON threshold is also changed in keeping with the increase in the blowoff port temperature. In the example shown in Fig. 9, the engine ON threshold is set to 36°C.

Thereafter, the economical running ECU 10 monitors the blowoff port temperature of the blower fan 41, and turns on the engine to shift the engine mode to a fourth state that is an "engine start state" if the blowoff port temperature is reduced below 36°C that is the engine ON threshold. In the example shown in Fig. 9, the engine ON threshold for air-conditioning of Fig. 9(H) at the time g is requested. In addition, the blowoff port temperature settlement detection timer is cleared if the blowoff port temperature is reduced below 40°C that is a first threshold temperature (the time f shown in Fig. 9).

If it is determined that a restart of the engine is needed, the economical running ECU 10 requests driving of the engine by the starter motor 17 to the engine ECU 21. The engine ECU 21 determines whether or not the starter driving request from the economical running ECU 10 is permitted according to the number of rotations of the engine. If a permission signal which permits starter driving is input from the engine ECU 21, the economical running ECU 10 turns on the transistor 12 shown in Fig. 4 to drive the starter motor 17.

As such, in this embodiment, it is determined whether or not the economical running control is performed from the engine water temperature which cools the engine, and the temperature of the blowing air from the heater 40. Accordingly, when shifting to the economical running control is made, it can be determined whether or not the air conditioning performance of the air conditioner is sufficiently satisfied, and thus, it can be determined whether or not the economical running control is performed.

Additionally, when the state where the temperature of blowing air is equal to or higher than the first threshold temperature lasts for a predetermined time or more, whether or not the air conditioner can maintain its air conditioning performance when shifting to the economical running control has been made can be determined with high precision by permitting the economical running control.

Additionally, by setting the engine ON threshold which determines whether or not the engine is restarted based on the temperature of the blowing air of the heater 40 after the stop of the engine, the economical running ECU 10 can restart the engine before an occupant feels cold.

Additionally, the engine can be restarted with optimal timing by changing the engine ON threshold according to the temperature of the blowing air after the stop of the engine.

Additionally, when the temperature of the blowing air changes to its increase side, the economical running ECU 10 changes the engine ON threshold. If a restart determination threshold remains low when the temperature of the blowing air changes to its increase side, a temperature difference between the temperature of the blowing air which has been changed and the engine ON threshold becomes large, and an occupant may feel cold. Thus, the engine can be restarted before the occupant feels cold by changing the engine ON threshold.

Additionally, since the economical running ECU 10 resets the engine ON threshold by using a value when the peak of the increased temperature of the blowing air is held, the temperature change of the blowing air can be exactly reflected on the engine ON threshold.

Additionally, in Embodiment 2 described above, the first threshold temperature is calculated on the outside air temperature measured by the outside temperature sensor. However, a temperature sensor can be provided in the vehicle interior, and the first threshold temperature can be set based on the vehicle interior temperature measured by this temperature sensor.

Additionally, as the condition which stops the engine to permit idling stop, only the temperature of the blowing air from the heater 40 may be used as a determination material. That is, whether or not the stop of the engine is permitted is determined by determining whether or not the blowoff port temperature measured by the blowoff port temperature sensor 43 is equal to or higher than a predetermined temperature.

The above-described first and second embodiments are examples of the preferred embodiments of the invention. It should be noted herein that the invention is not limited thereto, and various modifications can be made without departing the concept of the invention.

For example, in Embodiment 1 described above, if an engine stop condition is satisfied and the engine stops, the peak of the value of the blowoff port temperature is held until predetermined time has lapsed. However, if the predetermined time has lapsed, the blowoff port temperature may be fixed to a maximum value within the predetermined time.

Additionally, in Embodiments 1 and 2, a lower temperature of the temperature obtained from outside air temperature and the temperature obtained from the blowoff port temperature at the time of the stop of the engine is used as the threshold temperature which performs the engine start. However, various configurations are possible like using a higher one of two temperatures or calculating a new temperature by taking the average of two temperatures.

Additionally, in Embodiments 1 and 2 described above, the blowoff port temperature which has been increased after the stop of the engine is obtained by holding the peak of the blowoff port temperature after the stop of the engine. In addition to this, various configurations are possible by using the blowoff port temperature acquired after predetermined time (average time taken to stabilize the blowoff port temperature) from the time point to OFF from ON of the blower SW or a time point of the stop of the engine, for example, when the history where the blower SW has changed from OFF to ON within the predetermined time before the engine stops remains, or when it is determined that the blowoff port temperature may be increased after the stop of the engine.

Additionally, the outside air temperature used in Embodiments 1 and 2 described above includes a temperature acquired by a temperature sensor (for example, provided in a portion into which the outside air outside the vehicle is taken or provided apart from a part which has an effect on the temperature of the engine or like) provided in a position where it can be determined to be almost the same as the temperature outside the vehicle, or a temperature in the vicinity of the vehicle acquired by communication or the like from the outside.

### [Embodiment 3]

A third embodiment of the invention will be described referring to the accompanying drawings. In addition, since the configuration of this embodiment is the same as that of the first embodiment, detailed description thereof is omitted.

When the blower SW of the air conditioner 40 is turned on immediately before shifting to the idling stop state, first, the economical running ECU 10 predicts the time T [sec] in a state where the blowoff port temperature of the air conditioner 40 is unsettled, based on at least one of the outside air temperature, the engine water temperature, and the blower level of the blower fan 41. The expression "the state where the blowoff port temperature is unsettled" means a state where the temperature of the blowing air from the air conditioner 40 is repeatedly increased and reduced, and the increase in the temperature of the blowing air is not stopped. During the prediction time T [sec] which has been predicted, the economical running ECU 10 does not use the blowoff port temperature of the air conditioner 40 for determination of whether or not shifting to the idling stop state is made by the economical running control. Additionally, when the engine has already been in the idling stop state, the economical running ECU 10 does not use the blowoff port temperature of the air conditioner 40 for determination of whether or not the engine is returned from the idling stop state.

If the economical running ECU 10 predicts T [sec] at which the blowoff port temperature of the air conditioner 40 is settled, the economical running ECU predicts the transition of the engine water temperature during the prediction time T [sec] when the engine has been stopped, and sets the stop condition of the engine based on the transition of the engine water temperature which has been predicted. Specifically, the engine water temperature (or heater core temperature) X [°C] which is reduced during the prediction time T [sec] is predicted on the basis on the outside air temperature and the blower level of the blower fan 41. Then, it is determined whether or not shifting to the idling stop state is made based on a prediction value X [°C] of the temperature reduction in the engine water temperature. Additionally, when the engine has already been in the idling stop state, the determination of whether or not the engine is returned to the engine start state from the idling stop state is performed based on the engine water temperature (or heater core temperature) which is reduced during the prediction time T [sec].

Additionally, the economical running ECU 10 determines the blowoff port temperature of the air conditioner 40 has been settled after the lapse of the prediction time T [sec], and decides whether or not shifting to the idling stop state is made and whether or not returning to the engine start state from the idling stop state is made, using the blowoff port temperature of the air conditioner 40.

Additionally, whether or not shifting to the idling stop state is made and whether or not returning to the engine start state from the idling stop state is made may be determined based on at least one of the vehicle interior temperature and the temperature outside the vehicle other than the blowoff port temperature of the air conditioner 40.

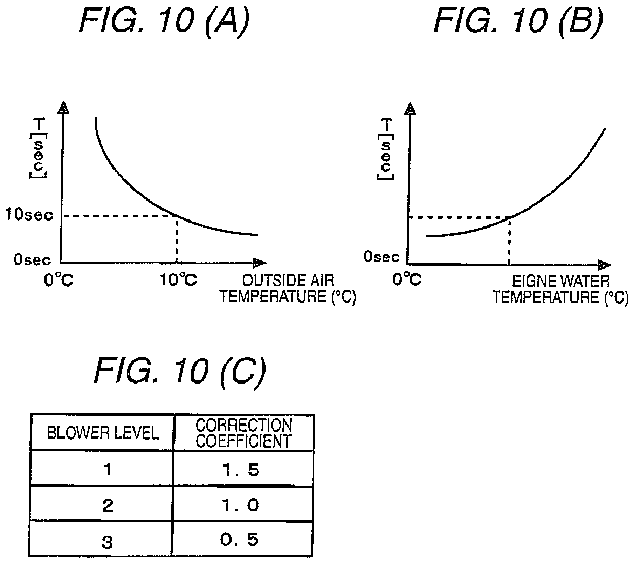

A prediction method of the prediction time T [sec] at which the blowoff port temperature of the air conditioner 40 is settled will be concretely described referring to Figs. 10(A) to 10(C).

The time that is taken until the blowoff port temperature is settled after the air conditioner 40 is turned on changes deepening on the outside air temperature, the engine water temperature, and the amount of blowing air (hereinafter referred to the blower level) from the blower fan 41.

For example, as the outside air temperature is lower, much time is taken until the blowoff port temperature reaches a target temperature (refer to Fig. 10(A)). For this reason, as the outside air temperature is lower, the prediction time T [sec] is lengthened, and as the outside air temperature is higher, the prediction time T [sec] is shortened.

Additionally, as the engine water temperature immediately after the turn-on of the blower SW is higher, a difference is caused between the blowoff port temperature of the air conditioner 40 immediately after the turn-on of the blower SW and the target temperature of the air conditioner 40 (refer to Fig. 10(B)). For this reason, as the engine water temperature immediately after the turn-on of the blower SW is higher, the prediction time T [sec] is lengthened, and as the engine water temperature is lower, the prediction time T [sec] is shortened.

Additionally, since the amount of the blowing air from the blower fan 41 is smaller when the blower level of the blower fan 41 is lower, the amount of wind which hits the blowoff port temperature sensor 43 is small. On the contrary, if the blower level is higher, and the amount of blowing air is larger, the amount of wind which hits the blowoff port temperature sensor 43 also increases. For this reason, as the blower level is lower, the prediction time T [sec] is lengthened, and as the blower level is higher, the prediction time T [sec] is shortened.

The map shown in Fig. 10(A), the map shown in Fig, 10(B) and the table shown in Fig. 10(C) are recorded on a memory such as the RAM 73 of the economical running ECU 10. If the outside air temperature or engine water temperature is measured by a sensor, the economical running ECU 10 calculates the prediction time T [sec] with reference to the map shown in Fig. 10(A) or Fig. 10(B) based on the measured outside air temperature or engine water temperature. Additionally, the economical running ECU 10 corrects the obtained prediction time T [sec] with reference to a table shown in Fig. 10(C) by the blower level of the blower fan 41. For example, when the blower level of the blower fan 41 has three steps of a level 1, a level 2, and a level 3 (the level 3 is a highest blower level), as shown in Fig. 10(C), [1.5], [1.0], and [0.5] are prepared as correction coefficients. The prediction time T [sec] is settled by multiplying the prediction time T [sec] obtained from the map shown in Fig. 10(A) or Fig. 10(B) by a correction value obtained from the blower level.

For example, when the outside air temperature is 10°C, and the blower level of the blower fan 41 is the level 3, first, the economical running ECU 10 obtains T = 10 [sec] with reference to the map shown in Fig. 10(A). Next, the economical running ECU 10 uses 5 [sec] as the prediction time T [sec] by multiplying the obtained T = 10 [sec] by the correction time [0.5] obtained from the blower level.

In addition, the prediction time T [sec] at which the blowoff port temperature of the air conditioner 40 is settled may be a fixed value. By setting a worst value assumed from the outside air temperature, the blower level, and the engine water temperature, the time during which the blowoff port temperature of the blower fan 41 is increased can be clocked even if the vehicle is put under any circumstances. Additionally, the prediction time T [sec] may be calculated using all of the outside air temperature, the engine water temperature, and the blower level of the blower fan 41, and may be calculated from at least one.

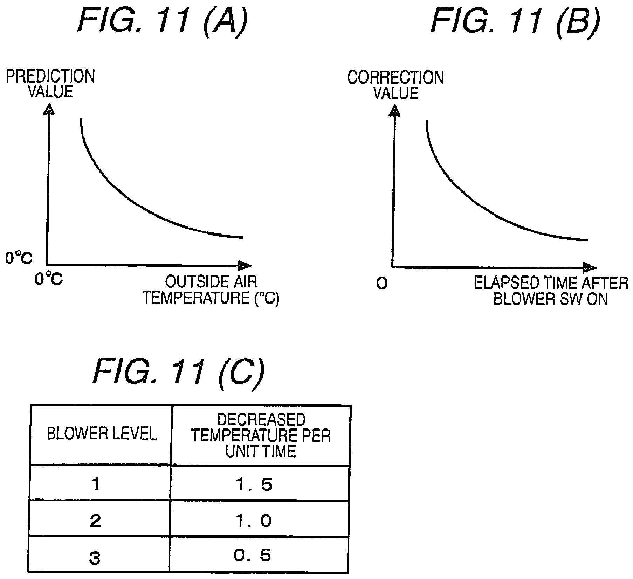

Next, a calculation method of a prediction value X [°C] of the engine water temperature reduction will be described referring to Figs. 11(A) to 11(C).

The map shown in Fig. 11(A), the map shown in Fig. 11(B) and the table shown in Fig. 11(C) are recorded on a memory such as the RAM 73 of the economical running ECU 10. The map shown in Fig. 11(A) shows the relationship between the outside air temperature and the prediction value X [°C] of the temperature reduction in the engine water temperature. As the outside air temperature is lower, the temperature reduction of the engine water temperature becomes larger.

Additionally, in the map shown in Fig. 11(B) is the lapsed time after the turn-on of the blower SW and a correction value which corrects the prediction value X [°C] of the engine water temperature reduction are recorded. As the lapsed time, i.e., the prediction time T [sec] at which the blowoff port temperature of the air conditioner 40 is settled is longer, the temperature reduction of the engine water temperature becomes larger.

The economical running ECU 10 first obtains the prediction value X [°C] from the outside air temperature with reference to the map shown in Fig. 11(A). Next, the economical running ECU 10 obtains a correction value which corrects the prediction value X [°C] with reference to the map shown in Fig. 11 (B) based on the prediction time T [sec] of the time at which the blowoff port temperature of the air conditioner 40 is settled. The prediction value X [°C] of the engine water temperature reduction is corrected using the calculated correction value.

If the prediction value X [°C] is obtained, the economical running ECU 10 adds a lower limit temperature [°C] of the engine water temperature at which it is necessary to turn on the engine 30 in order to maintain the air conditioning performance of the air conditioner 40 to the prediction value X [°C]. The lower limit temperature is the temperature of the engine water temperature at which the idling stop state should be stopped to turn on the engine 30 if the engine water temperature becomes equal to or lower than the lower limit temperature. For example, if the lower limit temperature of the engine water temperature at which the engine 30 should be turned on in order to maintain the air conditioning performance of the air conditioner 40 is set to 65 [°C], (65 + X) [°C] becomes an added value of the prediction value X and the lower limit temperature of the engine water temperature. In addition, the prediction value X [°C] of the temperature reduction in the engine water temperature is obtained by the absolute value thereof. Additionally, the added value is hereinafter referred to as an estimated engine ON threshold.

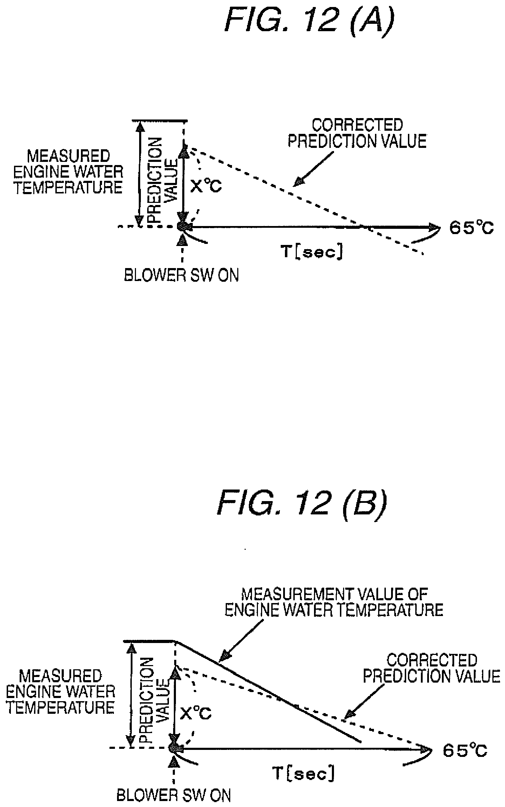

Next, the economical running ECU 10 compares the current engine water temperature measured by the engine water temperature sensor 34 with the estimated engine ON threshold (65 + X) [°C]. The economical running ECU 10 permits the shifting to the idling stop state if the measured current engine water temperature is equal to or higher than the estimated engine ON threshold (65 + X) [°C] (refer to Fig. 12(A)).

Next, the economical running ECU 10 corrects the estimated engine ON threshold [°C] with reference to the table shown in Fig. 11(C) while counting the prediction time T [sec] by using the blowoff port temperature settlement detection timer. In the map shown in Fig. 11(C), the temperature reduction in the engine water temperature per unit time is recorded for every blower level. The economical running ECU 10 acquires the temperature reduction per unit time of the engine water temperature with reference to the map shown in Fig. 11(C) from the blower level of the blower fan 41. If the temperature reduction per unit time in the engine water temperature is acquired, the economical running ECU 10 subtracts the temperature reduction from the estimated engine ON threshold [°C] whenever unit time lapses. This is continuously performed while the prediction time T [sec] at which the blowoff port temperature of the air conditioner 40 is settled.

As shown in Fig. 12(A), when the correction value of the estimated engine ON threshold [°C] becomes smaller than the lower limit temperature (for example, 65 [°C]) of the engine water temperature before the prediction time T [sec] at which the blowoff port temperature is settled has lapsed, the economical running ECU 10 determines that the start of the engine 30 is required, and outputs an engine start request to the engine ECU 21. That is, if the correction value of the prediction value X [°C] of the temperature reduction in the engine water temperature becomes negative, the economical running ECU 10 outputs an engine start request to the engine ECU 21.

Additionally, as shown in Fig. 12(B), even when the correction value of the estimated engine ON threshold (prediction value X + 65) [°C] becomes higher than an actual engine water temperature measured by the engine water temperature sensor 34 during the prediction time T [sec] at which the blowoff port temperature is settled, the economical running ECU 10 determines that the start of the engine 30 is required, and shifts the engine mode to the engine start state from the idling stop state.

In addition, after the prediction time T [sec], at which the blowoff port temperature is settled, has lapsed, the economical running ECU 10 compares the first threshold temperature with the second threshold temperature, and set a lower temperature to a threshold temperature (hereinafter referred to as an engine ON threshold) at which the engine is turned on.

The first threshold temperature is one when the blowoff temperature of the air conditioner 40 at which it is necessary to turn on the engine at the outside air temperature measured by an outside air temperature or at the vehicle interior temperature measured by a temperature sensor is obtained with reference to the map shown in Fig. 3. Additionally, the second threshold temperature is a temperature obtained by acquiring the blowoff temperature of the blower fan from the blowoff port temperature sensor 34 when shifting to the idling stop state has been made, and subtracting a predetermined temperature (for example, whcih is set to 8°C in this embodiment) from the blowoff port temperature. In addition, the engine sets a lower temperature of the first threshold temperature and the second threshold temperature to the engine ON threshold. This is because, although there is a hope to remain in the idling stop state as long as possible, it can be determined that the possibility that an occupant feels cold is high when an accrual temperature is reduced below both of a temperature at which a person may feel cold based on the outside air temperature and a temperature at which the person may feel cold based on the amount of the temperature reduction.

Thereafter, the economical running ECU 100 monitors the blowoff port temperature of the blower fan. Then, if the blowoff port temperature is reduced below the engine ON threshold, the economical running ECU 10 turns on the engine to shift the engine mode to the engine start state.

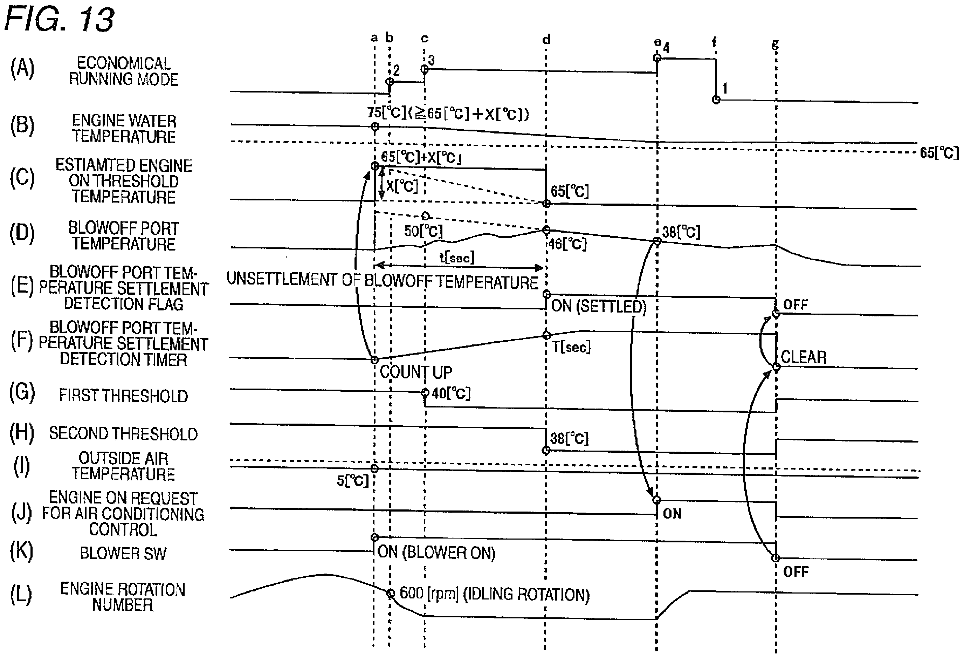

The processing of the economical running ECU 10 will be described in detail referring to Fig. 13.

It is assumed that an idling stop condition is satisfied, the blower SW is turned on immediately before shifting to the "idling stop preparation state" that is the second state (refer to the point a of Fig. 13(K)). If the blower SW is turned on, a blower motor (not shown) starts driving, and the blowing air from the blower fan 41 is blown into the vehicle interior.

The economical running ECU 10 predicts the prediction time T [sec] at which the blowoff port temperature of the air conditioner 40 is settled, and the prediction value X [°C] of the engine water temperature which is reduced during this prediction time T [sec]. The prediction time T [sec] is predicted based on the outside air temperature or engine water temperature, and the blower level of the air conditioner 40. Additionally, the prediction value X [°C] of the engine water temperature which is reduced is predicted from, for example, the outside air temperature, the lapsed time after the blower SW is turned on, and the blower level.

Next, the economical running ECU 10 counts the prediction time T [sec] at which the blowoff port temperature of the air conditioner 40 is settled using the blowoff port settlement detection timer (refer to the counted value of the blowoff port temperature settlement detection timer shown in Fig. 13 (F).

If the counting of the blowoff port temperature settlement detection timer is started, the economical running ECU 10 corrects the prediction value X [°C] of the engine water temperature which is reduced during the prediction time T [sec] based on the blower level of the air conditioner 40. The economical running ECU 10 corrects the estimated engine ON threshold (prediction value X + 65) [°C] according to the blower level of the air conditioner 40 with reference to the table shown in Fig. 11(C). The dotted line of the sections a to d of the estimated engine ON threshold shown in Fig. 13 (C) shows the correction value of the estimated engine ON threshold.

Additionally, the economical running ECU 10 compares the engine water temperature measured by the sensor with the estimated engine ON threshold (prediction value X + 65) [°C]. If the measurement value of the engine water temperature measured by the sensor is a sufficiently higher temperature than the estimated engine ON threshold (prediction value X + 65) [°C], the economical running ECU 10 permits the shifting to the idling stop state. If the shifting to the idling stop state is permitted (refer to the point c shown in Fig. 13(A)), the economical running ECU 10 acquires the outside air temperature measured by the outside air temperature sensor 18, and records the temperature in a memory, such as the RAM 73. The first threshold temperature is calculated by the measured outside air temperature (refer to the point c of a first reference value of Fig. 13(G)). In addition to the outside air temperature, the vehicle interior temperature can be used as the first threshold temperature.

Additionally, as shown in Fig. 12(A), when the correction value of the estimated engine ON threshold [°C] becomes smaller than the lower limit temperature (for example, 65 [°C]) of the engine water temperature before the prediction time T [sec] at which the blowoff port temperature is settled has lapsed, the economical running ECU 10 determines that the start of the engine 30 is required, and outputs an engine start request to the engine ECU 21.

Additionally, if the blowoff port temperature settlement detection timer counts the prediction time T [sec] before the correction value of the prediction value X [°C] becomes smaller than 65°C, the economical running ECU 10 determines the blowoff port temperature has been settled, and turns on a blowoff port temperature settlement detection flag (refer to the point c the blowoff port temperature settlement detection flag of the Fig. 13(E)).

If the blowoff port temperature settlement detection flag is turned on, the economical running ECU 10 obtains the engine ON threshold from the first threshold temperature and the second threshold temperature, and outputs a request which turns on the engine 30 to the engine ECU 21 if the blowoff port temperature becomes equal to or lower than the engine ON threshold.

In the example shown in Fig. 13, since the outside air temperature is 5°C, the first threshold temperature is determined as 40°C from the map shown in Fig. 3, and since the blowoff port temperature at the time of the lapse of T [sec] is 46°C, the second threshold temperature is set to 38°C obtained by subtracting 8°C from 46°C.

The economical running ECU 10 compares the first threshold temperature with the second threshold temperature to set the second threshold temperature with a lower temperature to the engine ON threshold.

Thereafter, the economical running ECU 10 inputs the blowoff port temperature measured by the blowoff port temperature sensor 43, and compares the measurement value of the blowoff port temperature with the engine ON threshold. If the measurement value of the blowoff port temperature becomes equal to or lower than the engine ON threshold, the economical running ECU 10 outputs an engine start request for air conditioning control to the engine ECU 21 (refer to the point e of Fig. 13(J). The engine ECU 21 which has received the engine start request turns on the engine 30.

Thereafter, when the blower SW is turned off (refer to the point g of Fig. 13(K)), the economical running ECU 10 resets the blowoff port temperature settlement detection timer (refer to the point g of Fig. 13(F)), and turns off the blowoff port temperature settlement detection flag (refer to the point g of Fig. 13(E)).

In addition, in the example shown in Fig, 13, it was determined whether or not the engine is started based on the blowoff port temperature of the air conditioner 40. In addition to this, whether or not returning to the engine start state from the idling stop state is made may be determined based on at least one of the vehicle interior temperature and the temperature outside the vehicle.

As such, in this embodiment, when the economical running control is performed, whether or not the air conditioning performance of the air conditioner 40 can be maintained is determined based on the engine water temperature which is reduced during predetermined time T [sec]. Accordingly, if it is determined with high precision whether or not an occupant may feel cold and it is determined that the occupant may feel cold when the economical running control is performed, the economical running control can be prohibited.

Additionally, after the time at which the blowoff port temperature of the air conditioner 40 is settled is predicted, and the predicted time has lapsed, whether or not shifting to the idling stop state is made and whether or not shifting to the engine start state from the idling stop state is made is determined using the blowoff port temperature. Accordingly, the blowoff port temperature can be used as a parameter of the economical running control while waiting for settlement of the temperature of the blowing air of the air conditioner 40.

### [Embodiment 4]

A fourth embodiment of the invention will be described referring to the accompanying drawings. In addition, since the configuration of this embodiment is the same as that of the first embodiment, detailed description thereof is omitted.

The economical running ECU 10 of this embodiment determines that the blowoff port temperature of the air conditioner 40 is in an unsettled state where an increase and a reduction are repeated for a predetermined time if he blower SW is turned on immediately before shifting to the idling stop state, and controls not to perform the shifting to the idling stop state. Additionally, if the predetermined time has lapsed, the economical running ECU 10 determines whether or not the engine water temperature is in a high state equal to or higher than a predetermined value, and permits the shifting to an idling stop state if the engine water temperature is in a high state.

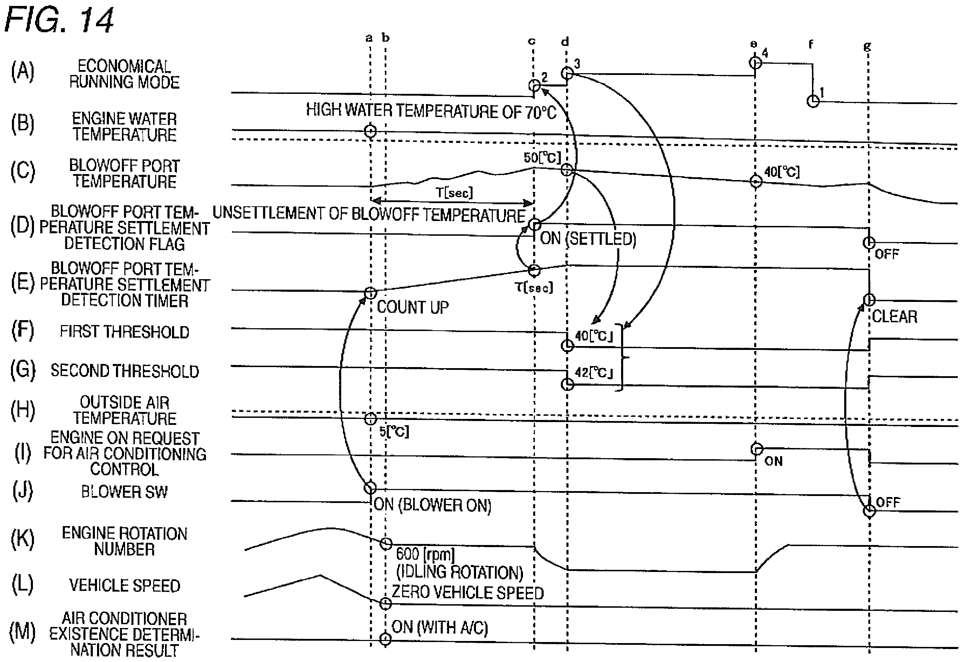

The control procedure of the economical running ECU 10 when the blower SW is turned on immediately before shifting to an idling stop state will be described referring to Fig. 14.

It is assumed that an idling stop condition is satisfied, the blower SW is turned on immediately before shifting to the "idling stop preparation state" that is the second state (refer to the point a in Fig. 14(J)). If the blower SW is turned on, a blower motor (not shown) starts driving, and the blowing air by the blower fan 41 is blown into the vehicle interior. It should be noted herein that, during predetermined time after the turn-on of the blower SW, the blowoff port temperature measured by the blowoff port temperature sensor 43 is in an unsettled state which repeats an increase and a reduction toward a set target temperature (the sections of a to c of the blowoff port temperature of Fig. 14(C)).

The economical running ECU 10 starts count-up by the blowoff port temperature settlement detection timer if the blower SW is turned on. As this timer counts the predetermined time T [sec] as a counted value, the economical running ECU 10 determines that the blowoff port temperature of the air conditioner 40 has been settled. In addition, a setting method of the prediction time T [sec] which the blowoff port temperature settlement detection timer counts is as described in Embodiment 1.

The economical running ECU 10 controls not to shift to the idling stop state until the blowoff port temperature settlement detection timer counts T [sec]. While the blowoff port temperature of the air conditioner 40 has a fluctuation which repeats an increase and a reduction, the shifting to the idling stop state is prohibited.

Next, if the counted value of the blowoff port temperature settlement detection timer becomes T [sec], the economical running ECU 10 determines that the blowoff port temperature of the air conditioner 40 has been settled, and thus, turns on the blowoff port temperature settlement detection flag (refer to the point c of Fig. 14(D)). If the blowoff port temperature settlement detection flag is turned on, the economical running ECU 10 determines whether or not the shifting to the idling stop state is possible. First, the economical running ECU 10 acquires the engine water temperature measured by the engine water temperature sensor 34 to record the temperature in a memory, such as the RAM 73. It is assumed that the engine water temperature acquired at this time is a high temperature of, for example, 70°C (a change in the engine water temperature is shown in Fig. 14(B)).

Since the engine water temperature is equal to or higher than a predetermined temperature (65°C in this embodiment), the economical running ECU 10 determines that is it is not necessary to turn of the engine 21 of the air conditioner 40, and determines that the shifting to the idling stop state is possible. If it is determined that the shifting to the idling stop state is possible, the economical running ECU 10 requests a fuel cut to the engine ECU 21, and shifts the engine mode to the second state (refer to the point c of Fig. 14(A)).

If the engine ECU 21 performs a fuel cut, and the shifting to the idling stop state is made (refer to the point d shown in Fig. 14(A)), the economical running ECU 10 acquires the outside air temperature measured by the outside air temperature sensor 18, and records the temperature in a memory, such as the RAM 73. If the outside air temperature is acquired, the economical running ECU 10 obtains the blowoff port temperature, i.e., first threshold temperature of the blower fan 41 at which it is necessary to start the engine 30 at the acquired outside air temperature with reference to the map shown in Fig. 3. In the example shown in Fig. 14, since the outside air temperature measured by the outside air temperature sensor 18 is 5°C (refer to Fig. 14(H)), the economical running ECU 10 sets the first threshold temperature to 40°C with reference to a map (refer to the point d of Fig. 14(F)).

Next, the economical running ECU 10 acquires the blowoff port temperature of the warm air measured by the blowoff port temperature sensor 43, and records the temperature in a memory, such as the RAM 73. If the blowoff port temperature is acquired, the economical running ECU 10 sets a value, which is obtained by subtracting a predetermined temperature (for example, whcih is set to 8°C in this embodiment) from the acquired blowoff port temperature, to the second threshold temperature (refer to the point d of Fig. 14(G)).

In this embodiment, it is assumed that the blowoff port temperature when shifting to the idling stop state is made is 50°C. For this reason, the economical running ECU 10 sets 42°C obtained by subtracting 8°C from 50°C to the second threshold temperature.

Next, the economical running ECU 100 compares the first threshold temperature with the second threshold temperature to set a lower temperature to a threshold temperature i.e., the engine ON threshold temperature at which the engine 30 is turned on.

In the example shown in Fig. 14, since the first threshold temperature is 40°C and the second threshold temperature is 42°C, 40°C which is the first threshold temperature is set to the engine ON threshold.

Thereafter, the economical running ECU 10 monitors the blowoff port temperature measured by the blowoff port temperature sensor 43, and determines whether or not the blowoff port temperature has been reduced to the first threshold temperature set to the engine ON threshold.

Then, if the economical running ECU 10 determines that the blowoff port temperature has been reduced to 40°C that is the engine ON threshold, the economical running ECU outputs an engine start request for air conditioning control to the engine ECU 21 (refer to the point e of Fig. 14(I)). The engine ECU 21 which has received the engine start request starts the engine 30.

As such, in this embodiment, the temperature of the blowing air of the air conditioner 40 does not becomes the temperature that a user desires during predetermined time after the blower SW is turned on. Thus, during this, an occupant does not feel cold by prohibiting the stop of the engine 30 by the economical running control.

The above-described embodiments 3 and 4 are examples of the preferred embodiments of the invention. It should be noted herein that the invention is not limited thereto, and various medications can be made without departing the concept of the invention as according to the appended claims.

## Claims

1. An engine control apparatus which is configured to perform an engine start control of automatically starting an engine mounted on a vehicle when the engine has stopped by an engine stop control of automatically stopping the engine, the engine control apparatus comprising:
a start condition setting section (10) which is configured to set an engine start condition for automatically starting the engine based on a blowoff temperature that is a temperature of air blown off from an air conditioner mounted on the vehicle at a predetermined time point if the air conditioner is being operated when the engine is automatically stopped by the engine stop control; and
an engine start control section (10) which is configured to instruct to start the engine if the engine start condition is satisfied,
**characterized in that**, if the blowoff temperature is increased after the engine start condition is set, the start condition setting section (10) resets the engine start condition based on the increased blowoff temperature.

2. The engine control apparatus as set forth in claim 1, wherein the start condition setting section (10) holds a peak temperature of the blowoff temperature and resets the engine start condition based on the peak temperature.

3. The engine control apparatus as set forth in claim 1 or 2, wherein the start condition setting section (10) resets the engine start condition based on the increased blowoff temperature until a predetermined time period has lapsed after the engine is automatically stopped by the engine stop control and does not reset the engine start condition after the predetermined time period has lapsed.

4. The engine control apparatus as set forth in any one of claims 1 to 3, wherein the start condition setting section (10) resets the engine start condition if the air conditioner is being operated.

5. The engine control apparatus as set forth in any one of claims 1 to 4, wherein the start condition setting section (10) resets the engine start condition based on the increased blowoff temperature and at least one of an outside air temperature and a vehicle interior temperature.

6. The engine control apparatus as set forth in claim 5, wherein the start condition setting section (10) compares a first threshold obtained based on the blowoff temperature with a second threshold obtained based on at least one of the outside air temperature and the vehicle interior temperature, and resets the engine start condition based on one of the first threshold and the second threshold, which is lower than another in temperature.

7. The engine control apparatus as set forth in claim 5, wherein the engine start control section (10) instructs to start the engine based on the second threshold obtained based on at least one of the outside air temperature and the vehicle interior temperature in a case where an operation for operating the air conditioner is performed during the engine stop control.

8. The engine control apparatus as set forth in any one of claims 1 to 7, wherein the engine start control section (10) instructs to start the engine in a case where an operation for operating the air conditioner is performed during the engine stop control.

9. The engine control apparatus as set forth in as set forth in claim 1, further comprising:
a first temperature condition setting section (10) which is configured to set a first blowoff temperature condition based on the blowoff temperature at the predetermined time point; and
a second temperature condition setting section (10) which is configured to set a second blowoff temperature condition based on an outside air temperature at a predetermined time point,
wherein the start condition setting section (10) sets the engine start condition based on the first blowoff temperature condition and the second blowoff temperature condition.

10. The engine control apparatus as set forth in claim 1, wherein the engine control apparatus is configured to be mounted on the vehicle having the air conditioner which warms up interior of the vehicle by using heat of cooling water for cooling the engine.

11. The engine control apparatus as set forth in claim 1,
wherein the engine control apparatus is configured to perform the engine stop control of automatically stopping the engine if a predetermined stop condition is satisfied and perform the engine start control of automatically starting the engine if a predetermined restart condition is satisfied during the engine stop control, and
wherein the engine control apparatus further comprising an engine stop control section (10) which is configured to instruct to stop the engine if an engine water temperature is equal to or higher than a predetermined value and the predetermined stop condition is satisfied.

12. An engine control method, comprising:
performing an engine stop control of automatically stopping an engine mounted on a vehicle; and
setting an engine start condition for automatically starting the engine based on a blowoff temperature that is a temperature of air blown off from an air conditioner mounted on the vehicle at a predetermined time point if the air conditioner is being operated when stopping the engine; **characterized by** further comprising,
if the blowoff temperature is increased after setting the engine start condition, resetting the engine start condition based on the increased blowoff temperature; and
instructing to start the engine if the engine start condition is satisfied.

## Patentansprüche

1. Motorsteuerungsvorrichtung, die konfiguriert ist, eine Motorstartsteuerung zum automatischen Starten eines an einem Fahrzeug befestigten Motors durchzuführen, wenn der Motor durch eine Motorstoppsteuerung zum automatischen Stoppen des Motors gestoppt wurde, wobei die Motorsteuerungsvorrichtung umfasst:
einen Startbedingungseinstellabschnitt (10), der konfiguriert ist, eine Motorstartbedingung zum automatischen Starten des Motors basierend auf einer Abblastemperatur einzustellen, die eine Temperatur der von einer Klimaanlage ausgeblasenen Luft ist, die an dem Fahrzeug zu einem vorbestimmten Zeitpunkt angebracht wurde, wenn die Klimaanlage betrieben wird, wenn der Motor automatisch durch die Motorstoppsteuerung gestoppt wird; und
einen Motorstartsteuerabschnitt (10), der konfiguriert ist, anzuweisen, den Motor zu starten, wenn die Motorstartbedingung erfüllt ist,
**dadurch gekennzeichnet, dass**, wenn die Abblastemperatur nach dem Einstellen der Motorstartbedingung erhöht wird, der Startbedingungseinstellabschnitt (10) die Motorstartbedingung basierend auf der erhöhten Abblastemperatur zurücksetzt.

2. Motorsteuerungsvorrichtung nach Anspruch 1, wobei der Startbedingungseinstellabschnitt (10) eine Spitzentemperatur der Abblastemperatur hält und die Motorstartbedingung basierend auf der Spitzentemperatur zurücksetzt.

3. Motorsteuerungsvorrichtung nach Anspruch 1 oder 2, wobei der Startbedingungseinstellabschnitt (10) die Motorstartbedingung basierend auf der erhöhten Abblastemperatur zurücksetzt, bis eine vorbestimmte Zeitspanne nachdem der Motor automatisch durch die Motorstoppsteuerung gestoppt wurde vergangen ist, und die Motorstartbedingung nach Ablauf der vorbestimmten Zeitspanne nicht zurücksetzt.

4. Motorsteuerungsvorrichtung nach einem der Ansprüche 1 bis 3, wobei der Startbedingungseinstellabschnitt (10) die Motorstartbedingung zurücksetzt, wenn die Klimaanlage betrieben wird.

5. Motorsteuerungsvorrichtung nach einem der Ansprüche 1 bis 4, wobei der Startbedingungseinstellabschnitt (10) die Motorstartbedingung basierend auf der erhöhten Abblastemperatur und einer Außenlufttemperatur und/oder einer Fahrzeuginnentemperatur zurücksetzt.

6. Motorsteuerungsvorrichtung nach Anspruch 5, wobei der Startbedingungseinstellabschnitt (10) einen auf Basis der Abblastemperatur erhaltenen ersten Schwellenwert mit einem auf Basis der Außenlufttemperaturen und/oder der Fahrzeuginnentemperatur erhaltenen zweiten Schwellenwert vergleicht und die Motorstartbedingung auf Basis des ersten Schwellenwerts und/oder des zweiten Schwellenwerts, der in Temperatur niedriger als der andere ist, zurücksetzt.

7. Motorsteuerungsvorrichtung nach Anspruch 5, wobei der Motorstartsteuerabschnitt (10) anweist, den Motor basierend auf dem zweiten Schwellenwert zu starten, der basierend auf der Außenlufttemperatur und/oder der Fahrzeuginnentemperatur in einem Fall erhalten wird, in dem ein Betrieb zum Betreiben der Klimaanlage während der Motorstoppsteuerung durchgeführt wird.

8. Motorsteuerungsvorrichtung nach einem der Ansprüche 1 bis 7, wobei der Motorstartsteuerabschnitt (10) anweist, den Motor in einem Fall zu starten, in dem ein Betrieb zum Betreiben der Klimaanlage während der Motorstoppsteuerung durchgeführt wird.

9. Motorsteuerungsvorrichtung nach Anspruch 1, ferner umfassend:
einen ersten Temperaturbedingungseinstellabschnitt (10), der konfiguriert ist, eine erste Abblastemperaturbedingung basierend auf der Abblastemperatur zu dem vorbestimmten Zeitpunkt einzustellen; und
einen zweiten Temperaturbedingungseinstellabschnitt (10), der konfiguriert ist, eine zweite Abblastemperaturbedingung basierend auf einer Außenlufttemperatur zu einem vorbestimmten Zeitpunkt einzustellen,
wobei der Startbedingungseinstellabschnitt (10) die Motorstartbedingung basierend auf der ersten Abblastemperaturbedingung und der zweiten Abblastemperaturbedingung einstellt.

10. Motorsteuerungsvorrichtung nach Anspruch 1, wobei die Motorsteuerungsvorrichtung konfiguriert ist, an dem Fahrzeug mit der Klimaanlage angebracht zu werden, die das Innere des Fahrzeugs erwärmt, indem sie Wärme aus Kühlwasser zum Kühlen des Motors verwendet.

11. Motorsteuerungsvorrichtung nach Anspruch 1,
wobei die Motorsteuerungsvorrichtung konfiguriert ist, die Motorstoppsteuerung zum automatischen Stoppen des Motors durchzuführen, wenn eine vorbestimmte Stoppbedingung erfüllt wird, und die Motorstartsteuerung zum automatischen Starten des Motors durchzuführen, wenn eine vorbestimmte Neustartbedingung während der Motorstoppsteuerung erfüllt wird, und
wobei die Motorsteuerungsvorrichtung ferner einen Motorstoppsteuerabschnitt (10) umfasst, der konfiguriert ist, anzuweisen, den Motor zu stoppen, wenn eine Motorwassertemperatur größer oder gleich einem vorbestimmten Wert ist und die vorbestimmte Stoppbedingung erfüllt wird.

12. Motorsteuerverfahren, umfassend:
Durchführen einer Motorstoppsteuerung zum automatischen Stoppen eines an einem Fahrzeug befestigten Motors; und
Einstellen einer Motorstartbedingung zum automatischen Starten des Motors basierend auf einer
Abblastemperatur, die eine Temperatur der von einer Klimaanlage, die zu einem vorbestimmten Zeitpunkt an dem Fahrzeug angebracht ist, ausgestoßenen Luft ist, wenn die Klimaanlage beim Stoppen des Motors betrieben wird;
ferner **dadurch gekennzeichnet, dass**,
wenn die Abblastemperatur nach dem Einstellen der Motorstartbedingung erhöht wird,
die Motorstartbedingung basierend auf der erhöhten Abblastemperatur zurückgesetzt wird; und
Anweisen zum Starten des Motors, wenn die Motorstartbedingung erfüllt wird.

## Revendications

1. Appareil de commande de moteur qui est configuré pour réaliser une commande de démarrage de moteur pour le démarrage automatique d'un moteur monté sur un véhicule lorsque le moteur est arrêté par une commande d'arrêt de moteur pour l'arrêt automatique du moteur, l'appareil de commande de moteur comprenant :
une section de définition de condition de démarrage (10) qui est configurée pour définir une condition de démarrage de moteur pour le démarrage automatique du moteur sur la base d'une température de soufflage qui est une température d'air soufflé à partir d'un climatiseur monté sur le véhicule à un moment prédéterminé si le climatiseur est actionné lorsque le moteur est automatiquement arrêté par la commande d'arrêt de moteur ; et
une section de commande de démarrage de moteur (10) qui est configurée pour ordonner le démarrage du moteur si la condition de démarrage de moteur est remplie,
**caractérisé en ce que**, si la température de soufflage est augmentée après que la condition de démarrage de moteur est remplie, la section de définition de condition de démarrage (10) redéfinit la condition de démarrage de moteur sur la base de la température de soufflage augmentée.

2. Appareil de commande de moteur selon la revendication 1, dans lequel la section de définition de condition de démarrage (10) maintient une température de pointe de la température de soufflage et redéfinit la condition de démarrage de moteur sur la base de la température de pointe.

3. Appareil de commande de moteur selon la revendication 1 ou 2, dans lequel la section de définition de condition de démarrage (10) redéfinit la condition de démarrage de moteur sur la base de la température de soufflage augmentée jusqu'à l'écoulement d'une durée prédéterminée après que le moteur est automatiquement arrêté par la commande d'arrêt de moteur et ne redéfinit pas la condition de démarrage de moteur après l'écoulement de la durée prédéterminée.

4. Appareil de commande de moteur selon l'une quelconque des revendications 1 à 3, dans lequel la section de définition de condition de démarrage (10) redéfinit la condition de démarrage de moteur si le climatiseur est actionné.

5. Appareil de commande de moteur selon l'une quelconque des revendications 1 à 4, dans lequel la section de définition de condition de démarrage (10) redéfinit la condition de démarrage de moteur sur la base de la température de soufflage augmentée et d'une température d'air extérieur et/ou d'une température intérieure de véhicule.

6. Appareil de commande de moteur selon la revendication 5, dans lequel la section de définition de condition de démarrage (10) compare un premier seuil obtenu sur la base de la température de soufflage à un second seuil obtenu sur la base de la température d'air extérieur et/ou de la température intérieure de véhicule, et redéfinit la condition de démarrage de moteur sur la base du premier seuil ou du second seuil, qui est inférieur à l'autre seuil en termes de température.

7. Appareil de commande de moteur selon la revendication 5, dans lequel la section de commande de démarrage de moteur (10) ordonne le démarrage du moteur sur la base du second seuil obtenu sur la base de la température d'air extérieur et/ou de la température intérieure de véhicule dans un cas où une opération d'actionnement du climatiseur est réalisée pendant la commande d'arrêt de moteur.

8. Appareil de commande de moteur selon l'une quelconque des revendications 1 à 7, dans lequel la section de commande de démarrage de moteur (10) ordonne le démarrage du moteur dans un cas où une opération d'actionnement du climatiseur est réalisée pendant la commande d'arrêt de moteur.

9. Appareil de commande de moteur selon la revendication 1, comprenant en outre :
une première section de définition de condition de température (10) qui est configurée pour définir une première condition de température de soufflage sur la base de la température de soufflage au moment prédéterminé ; et
une seconde section de définition de condition de température (10) qui est configurée pour définir une seconde condition de température de soufflage sur la base d'une température d'air extérieur au moment prédéterminé ; et
dans lequel la section de définition de condition de démarrage (10) définit la condition de démarrage de moteur sur la base de la première condition de température de soufflage et de la seconde condition de température de soufflage.

10. Appareil de commande de moteur selon la revendication 1, dans lequel l'appareil de commande de moteur est configuré pour être monté sur le véhicule comprenant le climatiseur qui réchauffe l'intérieur du véhicule au moyen de la chaleur d'eau de refroidissement permettant de refroidir le moteur.

11. Appareil de commande de moteur selon la revendication 1,
dans lequel l'appareil de commande de moteur est configuré pour réaliser la commande d'arrêt de moteur pour l'arrêt automatique du moteur si une condition d'arrêt prédéterminée est remplie et réaliser la commande de démarrage de moteur pour le démarrage automatique du moteur si une condition de redémarrage prédéterminée est remplie pendant la commande d'arrêt de moteur, et
dans lequel l'appareil de commande de moteur comprend en outre une section de commande d'arrêt de moteur (10) qui est configurée pour ordonner l'arrêt du moteur si une température d'eau de moteur est égale ou supérieure à une valeur prédéterminée et la condition d'arrêt prédéterminée est satisfaite.

12. Procédé de commande de moteur, comprenant :
la réalisation d'une commande d'arrêt de moteur pour l'arrêt automatique d'un moteur monté sur un véhicule ; et
la définition d'une condition de démarrage de moteur pour le démarrage automatique du moteur sur la base d'une température de soufflage qui est une température d'air soufflé à partir d'un climatiseur monté sur le véhicule à un moment prédéterminé si le climatiseur est actionné lors de l'arrêt du moteur ; **caractérisé en ce qu'**il comprend en outre,
si la température de soufflage est augmentée après la définition de la condition de démarrage de moteur, la redéfinition de la condition de démarrage de moteur sur la base de la température de soufflage augmentée ; et
l'instruction de démarrage du moteur si la condition de démarrage de moteur est remplie.
